(19) Europäisches Patentamt
European Patent Office
Office européen des brevets

(11) **EP 2 099 137 A2**

(12) **DEMANDE DE BREVET EUROPEEN**

(43) Date de publication:
**09.09.2009 Bulletin 2009/37**

(51) Int Cl.:
*H04B 1/69* (2006.01)   *H04L 1/06* (2006.01)

(21) Numéro de dépôt: **09153838.9**

(22) Date de dépôt: **27.02.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**
Etats d'extension désignés:
**AL BA RS**

(30) Priorité: **04.03.2008 FR 0851400**

(71) Demandeur: **Commissariat à l'Energie Atomique Bâtiment D "Le Ponant" 25 rue Leblanc 75015 Paris (FR)**

(72) Inventeur: **Abou Rjeily, Chadi Byblos (LB)**

(74) Mandataire: **Augarde, Eric Brevalex 56 Boulevard de l'Embouchure, Bât. B B.P. 27519 31075 Toulouse Cedex 2 (FR)**

(54) **Procédé de codage spatio-temporel différentiel**

(57)   La présente invention concerne un codage spatio-temporel différentiel de blocs de 2, 4 ou 8 symboles d'information appartenant à un alphabet de modulation 2-PPM, pour un système MIMO UWB impulsionnel à 2, 4 ou 8 antennes de transmission. Le code spatio-temporel proposé n'introduit pas d'inversion de polarité des impulsions, tout en présentant une diversité maximale et un débit unitaire.

L'invention concerne également un système de transmission UWB impulsionnel à 2, 4 ou 8 antennes utilisant ce codage spatio-temporel différentiel, ainsi qu'un système de réception associé ne nécessitant pas d'estimation de canal.

Fig. 5

**Description**

**DOMAINE TECHNIQUE**

La présente invention concerne le domaine du codage spatio-temporel ou STC (*Space Time Coding*) pour des systèmes multi-antenne, notamment pour des applications en télécommunications ultra-large bande ou UWB (*Ultra Wide Band*).

**ÉTAT DE LA TECHNIQUE ANTÉRIEURE**

Les systèmes de télécommunication sans fil de type multi-antenne sont bien connus de l'état de la technique. Ces systèmes utilisent une pluralité d'antennes à l'émission et/ou à la réception et sont dénommés, selon le type de configuration adoptée, MIMO (*Multiple Input Multiple Output*), MISO (*Multiple Input Single Output*) ou SIMO (*Single Input Multiple Output*). Par la suite nous emploierons le même terme MIMO pour couvrir les variantes MIMO et MISO précitées. L'exploitation de la diversité spatiale à l'émission et/ou à la réception permet à ces systèmes d'offrir des capacités de canal nettement supérieures à celles des systèmes mono-antenne classique (ou SISO pour Single Input Single Output). Cette diversité spatiale est généralement complétée par une diversité temporelle au moyen d'un codage spatio-temporel. Dans un tel codage, un symbole d'information à transmettre se trouve codé sur plusieurs antennes et plusieurs instants de transmission.

Un premier type de codes spatio-temporels est constitué par les codes STBC (*Space Time Block Coding*) ou codes par blocs.

Dans un système multi-antenne utilisant un code par blocs, un bloc de symboles d'information à transmettre est codé en une matrice de symboles de transmission, une dimension de la matrice correspondant au nombre d'antennes et l'autre correspondant aux instants consécutifs de transmission.

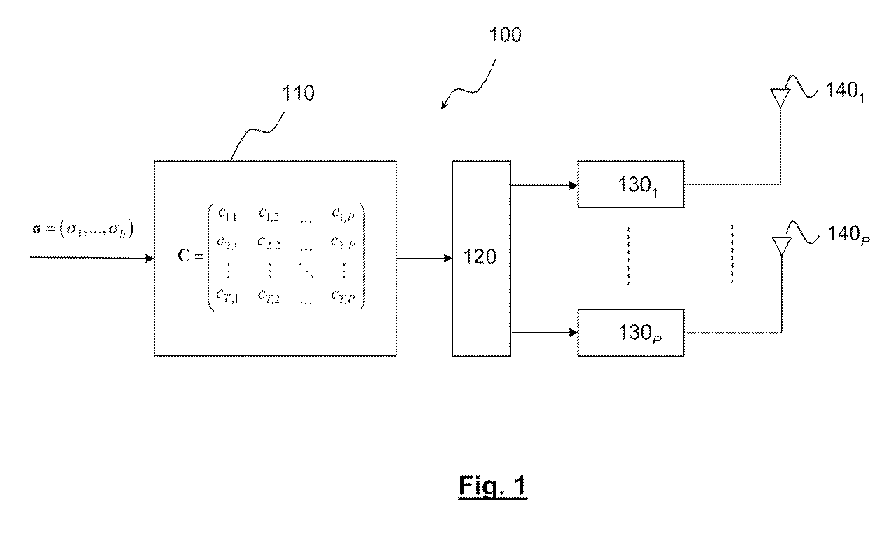

La Fig. 1 représente schématiquement un système de transmission MIMO 100 avec codage STBC. Un bloc de symboles d'information $\sigma=(\sigma_1,...,\sigma_b)$, par exemple un mot binaire de $b$ bits ou plus généralement de $b$ symboles $M$-aires, est codé en une matrice spatio-temporelle :

$$\mathbf{C} = \begin{pmatrix} c_{1,1} & c_{1,2} & ... & c_{1,P} \\ c_{2,1} & c_{2,2} & ... & c_{2,P} \\ \vdots & \vdots & \ddots & \vdots \\ c_{T,1} & c_{T,2} & ... & c_{T,P} \end{pmatrix} \qquad (1)$$

où les coefficients $c_{t,p}$, $t=1,..,T$; $p=1,..,P$ du code sont en règle générale des coefficients complexes dépendant des symboles d'information, $P$ est le nombre d'antennes utilisées à l'émission, $T$ est un entier indiquant l'extension temporelle du code, c'est-à-dire le nombre d'utilisations du canal ou PCUs (*Per Channel Use*). Un code spatio-temporel est dit réel si les coefficients $c_{t,p}$ sont réels, il est dit linéaire si la fonction de codage qui à tout bloc de symboles d'information $\sigma$ associe la matrice spatio-temporelle **C** est linéaire.

Sur la Fig. 1, on a désigné par 110 un codeur spatio-temporel. A chaque instant d'utilisation de canal $t$, le codeur fournit au multiplexeur 120 le $t$-ième vecteur-ligne de la matrice **C**. Le multiplexeur transmet aux modulateurs $130_1,...,130_P$ les coefficients du vecteur ligne et les signaux modulés sont transmis par les antennes $140_1,...,140_P$.

Le code spatio-temporel est caractérisé par son débit, c'est-à-dire par le nombre de symboles d'information qu'il transmet par instant d'utilisation de canal (PCU). Le code est dit à plein débit s'il est $P$ fois plus élevé que le débit relatif à une utilisation mono-antenne (SISO). Un code est dit à débit unitaire s'il est identique à celui relatif à une utilisation mono-antenne.

Le code spatio-temporel est caractérisé en outre par sa diversité qui peut être définie comme le rang de la matrice **C.** On aura une diversité maximale si pour deux mots de code $\mathbf{C_1}$ et $\mathbf{C_2}$ quelconques correspondant à deux vecteurs $\mathbf{S_1}$ et $\mathbf{S_2}$, la matrice $\mathbf{C_1}$-$\mathbf{C_2}$ est de rang plein.

Le code spatio-temporel est enfin caractérisé par son gain de codage qui traduit la distance minimale entre différents mots du code. On peut le définir comme :

$$\min_{\mathbf{C_1} \neq \mathbf{C_2}} \det\left( (\mathbf{C}_1 - \mathbf{C}_2)^{\mathbf{H}} (\mathbf{C}_1 - \mathbf{C}_2) \right) \qquad (2)$$

ou, de manière équivalente, pour un code linéaire :

$$\min_{\mathbf{C} \neq 0} \det\left( \mathbf{C^H C} \right) \qquad (3)$$

où det($\mathbf{C}$) signifie le déterminant de $\mathbf{C}$ et $\mathbf{C^H}$ est la matrice conjuguée transposée de $\mathbf{C}$. Pour une énergie de transmission par symbole d'information, le gain de codage est borné. Un code spatio-temporel sera d'autant plus résistant à l'évanouissement que son gain de codage sera élevé.

Toutefois, le décodage des codes STBC se fait de manière cohérente, ce qui suppose généralement d'effectuer une estimation de canal à la réception, c'est-à-dire de déterminer la matrice $\mathbf{H}$ des coefficients complexes de propagation entre les antennes d'émission et les antennes de réception. Cette estimation de canal est rendue possible grâce à l'envoi de séquences de symboles pilote par le système de transmission, ce qui réduit d'autant la charge utile moyenne des blocs de symboles d'information. De surcroît, cette estimation doit être faite fréquemment dans les cas d'un canal de transmission présentant un faible rapport signal sur bruit ou des fluctuations rapides.

Afin d'éviter de procéder à une estimation de canal, il a été proposé dans l'article de V. Tarokh et al. intitulé « A differential détection scheme for transmit diversity » publié dans IEEE Journal on Selected Areas in Communications, Vol. 18, N° 7, July 2000, pages 1169-1174, d'utiliser un codage spatio-temporel différentiel. Ce type de codage a été décrit de manière équivalente sous forme matricielle dans l'article de C. Gao et al. intitulé « Bit error probability for space-time block code with coherent and differential détection » publié dans Proc. of Vehicular Technology Conference, Vol. 1, pages 410-414, Sept. 2002, pages 410-414.

Le codage spatio-temporel différentiel décrit dans les articles précités est limité au cas d'un système MISO avec $P$=2 antennes d'émission et des symboles d'information appartenant à une constellation de modulation PSK. A la différence d'un codage STBC classique, la matrice du code spatio-temporel différentiel pour un bloc donné dépend non seulement des symboles d'information de ce bloc mais également de la matrice du code spatio-temporel pour le bloc précédent. Plus précisément, si les blocs successifs de symboles d'information sont notés $\sigma_{\mathbf{k}}$ où $k$ est un indice temporel correspondant à un temps bloc, égal à deux temps symbole, la matrice du code $\mathbf{C_k}$ pour un bloc courant $\sigma_{\mathbf{k}} = (\sigma_{1,k}, \sigma_{2,k})$ est donnée par la relation de récurrence :

$$\mathbf{C_k} = \mathbf{S_k C_{k-1}} \qquad (4)$$

et la donnée d'une matrice initiale $\mathbf{C_0}$, où $\mathbf{S_k} = \begin{pmatrix} \sigma_{1,k} & \sigma_{2,k} \\ -\sigma_{2,k}^* & \sigma_{1,k}^* \end{pmatrix}$, et $\mathbf{C_{k-1}} = \begin{pmatrix} c_{1,k-1} & c_{2,k-1} \\ -c_{2,k-1}^* & c_{1,k-1}^* \end{pmatrix}$ correspond à

la matrice du code pour le bloc précédent $\sigma_{\mathbf{k-1}}$.

Si l'on note $r_{k,1}$ et $r_{k,2}$ les scalaires correspondant aux signaux reçus par le récepteur respectivement pendant le premier temps symbole et le second temps symbole du bloc $\sigma_{\mathbf{k}}$ et si l'on construit les matrices suivantes :

$$\mathbf{R_k} = \begin{pmatrix} r_{1,k} & r_{2,k} \\ -r_{2,k}^* & r_{1,k}^* \end{pmatrix}, \quad \mathbf{R_{k-1}} = \begin{pmatrix} r_{1,k-1} & r_{2,k-1} \\ -r_{2,k-1}^* & r_{1,k-1}^* \end{pmatrix} \qquad (5)$$

le récepteur estime les symboles transmis à l'aide de :

$$\left(\hat{\sigma}_{1,k},\hat{\sigma}_{2,k}\right) = \underset{\sigma_{1,k};\sigma_{2,k}}{Arg\ max} \left(Tr\left(\mathbf{S}_\mathbf{k}^\mathbf{H}\mathbf{R}_\mathbf{k}\mathbf{R}_{\mathbf{k\text{-}1}}^\mathbf{H}\right)\right) \qquad (6)$$

où $Tr(\mathbf{X})$ est la trace de la matrice $\mathbf{X}$.

On remarquera que l'estimation de $\sigma_{1,k},\sigma_{2,k}$ dans l'expression (6) ne fait pas intervenir la matrice $\mathbf{H}$ du canal de transmission.

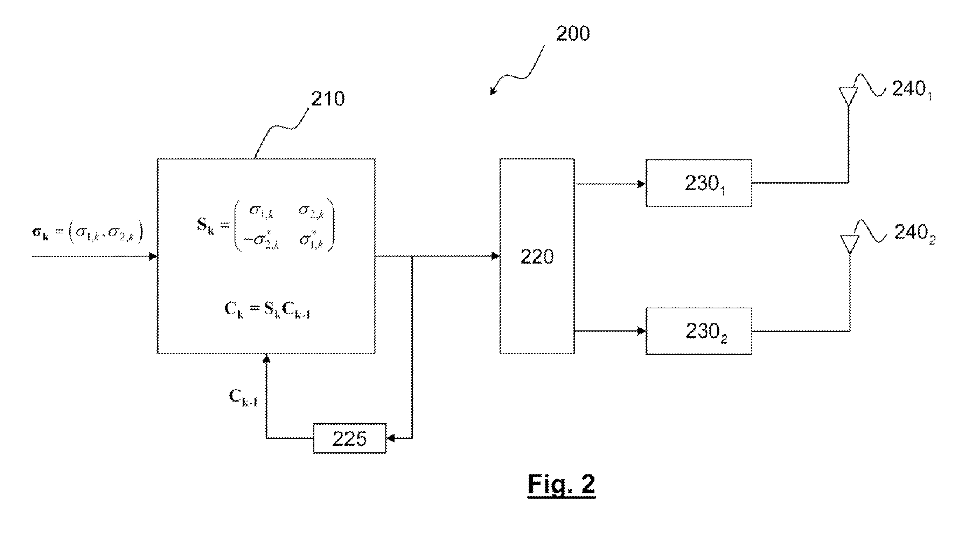

On a représenté en Fig. 2 un système de transmission MIMO 200 avec codage spatio-temporel différentiel. Le codeur spatio-temporel 210 reçoit les blocs de symboles d'information $\sigma_\mathbf{k}$, calcule la matrice $\mathbf{C}_\mathbf{k}$ à chaque temps-bloc ($\tau_B$) et transmet dans cet intervalle de temps un vecteur ligne de $\mathbf{C}_\mathbf{k}$ au multiplexeur 230 à chaque temps-symbole ($\tau_S$, avec $\tau_B = 2\tau_S$). On a fait figurer une boucle de retard 225 pour symboliser la récurrence (4). L'élément de retard 225 mémorise les vecteurs ligne pour fournir la matrice $\mathbf{C}_{\mathbf{k\text{-}1}}$ lors du codage du bloc $\sigma_\mathbf{k}$. Comme précédemment, le multiplexeur 220 transmet aux modulateurs $230_1,230_2$ les coefficients du vecteur ligne. Les signaux ainsi modulés sont transmis par les antennes $240_2,240_2$.

Un autre domaine des télécommunications a récemment fait l'objet de recherches considérables. Il s'agit des systèmes de télécommunication UWB, pressentis notamment pour le développement des futurs réseaux personnels sans fil (WPAN). Ces systèmes ont pour spécificité de travailler directement en bande de base avec des signaux très large bande. On entend généralement par signal UWB un signal conforme au masque spectral stipulé dans la réglementation du FCC du 14 Février 2002 et révisé en Mars 2005, c'est-à-dire pour l'essentiel un signal dans la bande spectrale 3.1 à 10.6 GHz et présentant une largeur de bande d'au moins 500 MHz à -10dB. En pratique, on connaît deux types de signaux UWB, les signaux multi-bande OFDM (MB-OFDM) et les signaux UWB de type impulsionnel. Nous nous intéresserons par la suite uniquement à ces derniers.

Un signal UWB impulsionnel est constitué d'impulsions très courtes, typiquement de l'ordre de quelques centaines de picosecondes, réparties au sein d'une trame. Afin de réduire l'interférence multi-accès (MAI pour *Multiple Access Interference*), un code de sauts temporels (TH pour *Time Hopping*) distinct est affecté à chaque utilisateur. Le signal issu ou à destination d'un utilisateur $k$ peut alors s'écrire sous la forme :

$$s_k(t) = \sum_{n=0}^{N_S-1} w(t - nT_s - c_k(n)T_c) \qquad (7)$$

où $w$ est la forme de l'impulsion élémentaire, $T_c$ est une durée bribe (ou chip), $T_s$ est la durée d'un intervalle élémentaire avec $N_s=N_cT_c$ où $N_c$ est le nombre de chips dans un intervalle, la trame totale étant de durée $T_f = N_sT_s$ où $N_s$ est le nombre d'intervalles dans la trame. La durée de l'impulsion élémentaire est choisie inférieure à la durée chip, soit $T_w \le T_c$. La séquence $c_k(n)$ pour $n=0,..,N_s-1$ définit le code de saut temporel de l'utilisateur $k$. Les séquences de sauts temporels sont choisies de manière à minimiser le nombre de collisions entre impulsions appartenant à des séquences de saut temporel d'utilisateurs différents.

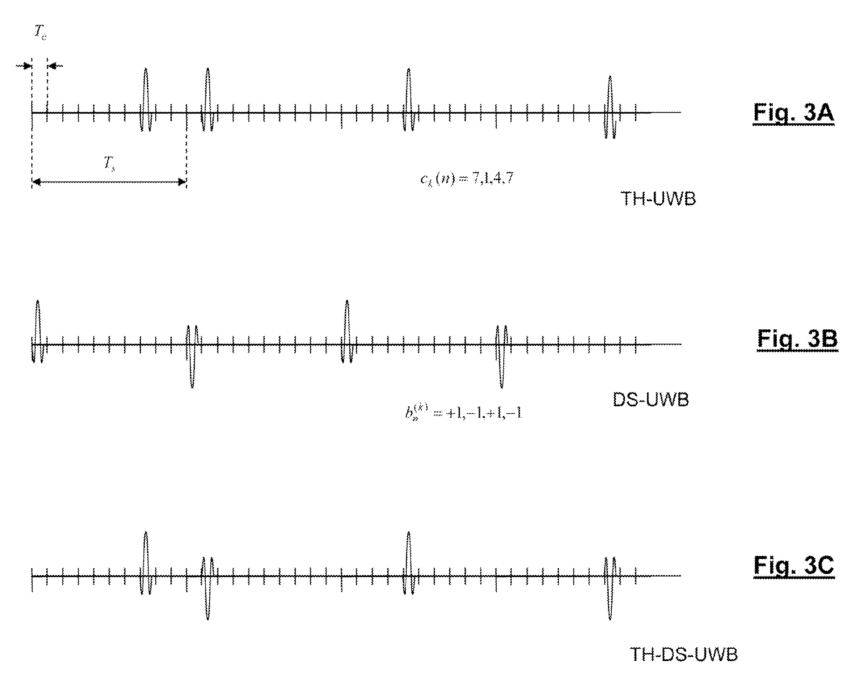

On a représenté en Fig. 3A un signal TH-UWB associé à un utilisateur $k$. Afin de transmettre un symbole d'information donné en provenance ou à destination d'un utilisateur $k$, on module généralement le signal TH-UWB à l'aide d'une modulation de position, soit pour le signal modulé :

$$s_k(t) = \sum_{n=0}^{N_s-1} w(t - nT_s - c_k(n)T_c - \mu_k\varepsilon) \qquad (8)$$

où $\varepsilon$ est un retard de modulation (dither) sensiblement inférieur à la durée chip et $\mu_k \in \{0,...,M\text{-}1\}$ est la position $M$-aire PPM du symbole.

Alternativement, les symboles d'information peuvent être transmis au moyen d'une modulation d'amplitude (PAM). Dans ce cas, le signal modulé peut s'écrire :

$$s_k(t) = \sum_{n=0}^{N_s-1} a^{(k)}.w(t - nT_s - c_k(n)T_c) \qquad (9)$$

où $a^{(k)}=2m'-1-M'$ avec $m'=1,..,M'$, est le symbole $M'$-aire de la modulation PAM. On peut par exemple utiliser une modulation BPSK ($M'=2$).

Les modulations PPM et PAM peuvent aussi être combinées en une modulation composite $M.M'$-aire. Le signal modulé a alors la forme générale suivante :

$$s_k(t) = \sum_{n=0}^{N_s-1} \sum_{m=0}^{M-1} a_m^{(k)}.w(t - nT_s - c_k(n)T_c - m\varepsilon) \qquad (10)$$

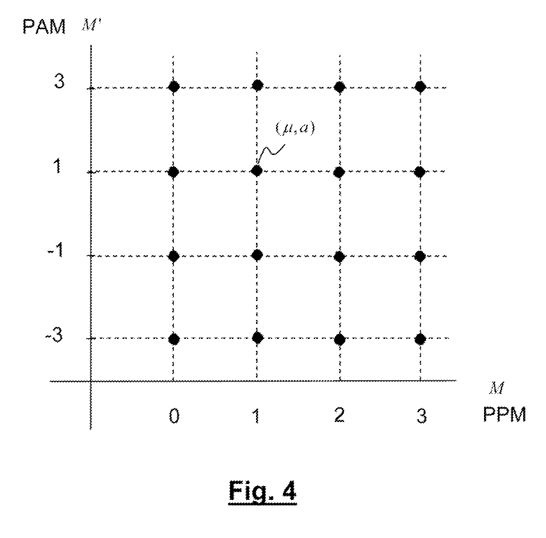

où les $a_m^{(k)}$ sont des éléments d'un alphabet de modulation $M$-PPM-$M'$-PAM de cardinal $Q=M.M'$. Cet alphabet a été représenté en Fig. 4. Pour chacune des $M$ positions temporelles, $M'$ amplitudes de modulation sont possibles. Un symbole $(\mu,a)$ de cet alphabet peut être représenté par une séquence $a_m$, $m = 0,..,M$-1 avec $a_m=\delta(m-\mu)a$ où $\mu$ est une position de la modulation PPM, $a$ est un élément de l'alphabet $M'$-PAM et $\delta(.)$ la distribution de Dirac.

Au lieu de séparer les différents utilisateurs au moyen de codes de sauts temporels, il est également possible de les séparer par des codes orthogonaux, par exemple des codes de Hadamard, comme en DS-CDMA. On parle alors de DS-UWB (*Direct Spread* UWB). Dans ce cas on a pour l'expression du signal non modulé, correspondant à (7) :

$$s_k(t) = \sum_{n=0}^{N_s-1} b_n^{(k)} w(t - nT_s) \qquad (11)$$

où $b_n^{(k)}$, $n = 0,..,N_s$-1 est la séquence d'étalement de l'utilisateur $k$. On remarque que l'expression (11) est analogue à celle d'un signal DS-CDMA classique. Elle en diffère cependant par le fait que les chips n'occupent pas toute la trame mais sont répartis à la période $T_s$. On a représenté en Fig. 3B un signal DS-UWB associé à un utilisateur $k$.

Comme précédemment, les symboles d'information peuvent être transmis au moyen d'une modulation PPM. Le signal DS-UWB modulé en position correspondant au signal TH-UWB (8) peut s'exprimer, en conservant les mêmes notations :

$$s_k(t) = \sum_{n=0}^{N_s-1} b_n^{(k)}.w(t - nT_s - \mu_k\varepsilon) \qquad (12)$$

Enfin, il est connu de combiner codes de sauts temporels et codes d'étalement spectral pour offrir des accès multiples aux différents utilisateurs. On obtient ainsi un signal UWB impulsionnel TH-DS-UWB de forme générale :

$$s_k(t) = \sum_{n=0}^{N_s-1} b_n^{(k)}.w(t - nT_s - c_k(n)T_c) \qquad (13)$$

On a représenté en Fig. 3C un signal TH-DS-UWB associé à un utilisateur $k$. Ce signal peut être lui-même modulé par une modulation $M$-PPM-$M'$-PAM, comme en (10). On obtient alors pour le signal modulé :

$$s_k(t) = \sum_{n=0}^{N_s-1} \sum_{m=0}^{M-1} a_m^{(k)} b_n^{(k)} . w(t - nT_s - c_k(n)T_c - m\varepsilon) \qquad (14)$$

Il est connu de l'état de la technique d'utiliser des signaux UWB dans des systèmes MIMO. Dans ce cas, chaque antenne transmet un signal UWB modulé en fonction d'un symbole d'information ou d'un bloc de tels symboles (STBC).

Il a été proposé dans l'article de C. Abou-Rjeily et al. intitulé « Differential space-time ultra-wideband communications » publié dans Proc. of IEEE Conference on Ultra-Wide Band, Zurich, Sept. 2005, pages 248-253, d'utiliser un code spatio-temporel différentiel pour moduler des signaux UWB dans un système MIMO à deux antennes d'émission. Les symboles d'information appartiennent à un alphabet de modulation $M$-PPM-$M'$-PAM. Si l'on note un bloc de tels symboles $\sigma_\mathbf{k} = (\sigma_{\mathbf{k},1},\sigma_{\mathbf{k},2})$ où $\sigma_{\mathbf{k},1} = s_{k,1}\mathbf{v}(d_{k,1})$, $\sigma_{\mathbf{k},2} = s_{k,2}\mathbf{v}(d_{k,2})$, $\mathbf{v}(d_{k,1})$, $\mathbf{v}(d_{k,2})$ sont des vecteurs de dimension $M$ dont les composantes sont respectivement $\delta(m - d_{k,1})$, $m = 0,...,M\text{-}1$ et $\delta(m - d_{k,2})$, $m = 0,...,M\text{-}1$ où $\delta$ est le symbole de Dirac. Le code spatio-temporel est alors défini par la matrice de taille $2M\times2$ :

$$\mathbf{C_k} = \begin{pmatrix} a_{k,1}\mathbf{v}(\mu_{k,1}) & a_{k,2}\mathbf{v}(\mu_{k,1}) \\ -a_{k,2}\mathbf{v}(\mu_{k,2}) & a_{k,1}\mathbf{v}(\mu_{k,2}) \end{pmatrix} \qquad (15)$$

où $\mathbf{v}(\mu_{k,1})$ et $\mathbf{v}(\mu_{k,2})$ sont des vecteurs de dimension $M$ dont les composantes respectives sont $\delta(m - \mu_{k,1})$, $m = 0,...,M\text{-}1$, et $\delta(m-\mu_{k,2})$, $m = 0,...,M\text{-}1$. La matrice $\mathbf{C_k}$ du code est calculée au moyen des relations de récurrence :

$$\mathbf{A_k} = \mathbf{S_k A_{k-1}} \qquad (16)$$

$$\mu_{k,i} = d_{k,i} + \mu_{k-1,i} \bmod M \qquad (17)$$

où $\bmod M$ signifie l'opération modulo $M$ et

$$\mathbf{A_k} = \begin{pmatrix} a_{k,1} & a_{k,2} \\ -a_{k,2} & a_{k,1} \end{pmatrix} \quad ; \quad \mathbf{A_{k-1}} = \begin{pmatrix} a_{k-1,1} & a_{k-1,2} \\ -a_{k-1,2} & a_{k-1,1} \end{pmatrix} \quad ; \quad \mathbf{S_k} = \begin{pmatrix} s_{k,1} & s_{k,2} \\ -s_{k,2} & s_{k,1} \end{pmatrix}$$

$$(18)$$

Les éléments du code spatio-temporel (15) sont des symboles dont les amplitudes respectives sont données par la relation de récurrence (16), et leurs positions PPM respectives par la relation de récurrence (17).

Dans le cas particulier de symboles d'information appartenant à un alphabet de modulation $M$-PPM, c'est-à-dire pour $M'=0$, les inversions de signe figurant dans les matrices (18) ont pour conséquence que les éléments du code spatio-temporel peuvent avoir des amplitudes négatives et par conséquent n'appartiennent pas à l'alphabet $M$-PPM. Il en résulte alors que les signaux UWB modulés par le code spatio-temporel contiennent des impulsions signées. Etant donné la très brève durée de ces impulsions et donc la très large bande des signaux UWB impulsionnels, il est excessivement difficile de récupérer une information de phase à la réception, et en particulier de détecter une inversion de signe. En outre, certains systèmes MIMO ne se prêtent pas ou mal à la transmission d'impulsions signées. Par exemple, les systèmes MIMO UWB optiques ne transmettent que des signaux d'intensité lumineuse TH-UWB, nécessairement dépourvus d'information de signe.

L'objet de la présente invention est par conséquent de proposer un code spatio-temporel différentiel pour un système MIMO utilisant des signaux UWB impulsionnels ne faisant pas appel à la transmission d'impulsions signées. Un objet subsidiaire de la présente invention est de proposer un système de transmission MIMO UWB utilisant ledit code spatio-temporel, ainsi qu'un système de réception associé.

## EXPOSÉ DE L'INVENTION

Selon un premier mode de réalisation, l'invention est définie par un procédé de codage spatio-temporel différentiel pour système de transmission UWB à deux éléments radiatifs, ledit procédé codant un bloc $\sigma_k=(s_{k,1},s_{k,2})$ de symboles d'information appartenant à un alphabet de modulation 2-PPM, en une séquence de deux vecteurs à deux composantes, les composantes d'un vecteur étant destinées à moduler en position un signal UWB impulsionnel pour un élément radiatif dudit système et une utilisation de canal de transmission donnés, chaque composante correspondant à une position de modulation PPM. Lesdits vecteurs sont obtenus à partir des éléments de la matrice de code :

$$\mathbf{C_k} = \begin{pmatrix} \mathbf{c_{k,1}} & \mathbf{c_{k,2}} \\ \mathbf{c_{k,2}\Omega} & \mathbf{c_{k,1}} \end{pmatrix}$$

avec $\mathbf{C_k} = \mathbf{sgn}\left(\mathbf{C_k^\circ} - \left[\mathbf{Min}\left(\mathbf{C_k^\circ}\right) \otimes \mathbf{u_1}\right]\right)$, $\mathbf{C_k^\circ} = \mathbf{C_{k-1}S_k}$, $\mathbf{u_1} = \begin{pmatrix} 1 & 1 \end{pmatrix}$, $\otimes$ est le produit de Kronecker, **sgn**

**(X)** est la matrice donnant les valeurs de signe des éléments de **X**, la valeur de signe étant respectivement égal à -1,0,1 si l'élément est négatif, nul ou positif, **Min(X)** est une matrice dont les éléments donnent les valeurs inférieures de deux éléments consécutifs d'une ligne de la matrice **X**, **C_{k-1}** est la matrice de code pour le bloc de symboles d'information précédent et

$$\mathbf{S_k} = \begin{pmatrix} \mathbf{s_{k,1}} & \mathbf{s_{k,2}} \\ \mathbf{s_{k,1}\Omega} & \mathbf{s_{k,2}\Omega} \\ \mathbf{s_{k,2}\Omega} & \mathbf{s_{k,1}} \\ \mathbf{s_{k,2}} & \mathbf{s_{k,1}\Omega} \end{pmatrix}$$

une ligne de la matrice **C_k** correspondant à une utilisation du canal de transmission et une colonne de la matrice correspondant à un élément radiatif, la matrice **C_k** étant définie à une permutation près de ses lignes et/ou ses colonnes et $\Omega$ étant une permutation des deux positions de modulation PPM.

Selon un second mode de réalisation, l'invention est définie par un procédé de codage spatio-temporel différentiel pour système de transmission UWB à quatre éléments radiatifs, ledit procédé codant un bloc $\sigma_k=(s_{k,1},s_{k,2},s_{k,3}, s_{k,4})$ de quatre symboles d'information appartenant à un alphabet de modulation 2-PPM, en une séquence de quatre vecteurs à deux composantes, les composantes d'un vecteur étant destinées à moduler en position un signal UWB impulsionnel pour un élément radiatif dudit système et une utilisation de canal de transmission donnés, chaque composante correspondant à une position de modulation PPM. Lesdits vecteurs sont obtenus à partir des éléments de la matrice de code :

$$\mathbf{C_k} = \begin{pmatrix} \mathbf{c_{k,1}} & \mathbf{c_{k,2}} & \mathbf{c_{k,3}} & \mathbf{c_{k,4}} \\ \mathbf{c_{k,2}\Omega} & \mathbf{c_{k,1}} & \mathbf{c_{k,4}\Omega} & \mathbf{c_{k,3}} \\ \mathbf{c_{k,3}\Omega} & \mathbf{c_{k,4}} & \mathbf{c_{k,1}} & \mathbf{c_{k,2}\Omega} \\ \mathbf{c_{k,4}\Omega} & \mathbf{c_{k,3}\Omega} & \mathbf{c_{k,2}} & \mathbf{c_{k,1}} \end{pmatrix}$$

avec $\mathbf{C_k} = \mathbf{sgn}\left(\mathbf{C_k^\circ} - \left[\mathbf{Min}\left(\mathbf{C_k^\circ}\right) \otimes \mathbf{u_1}\right]\right)$, $\mathbf{C_k^\circ} = \mathbf{C_{k-1}S_k}$, $\mathbf{u_1} = \begin{pmatrix} 1 & 1 \end{pmatrix}$, $\otimes$ est le produit de Kronecker, **sgn(X)** est la matrice donnant les valeurs de signe des éléments de **X**, la valeur de signe étant respectivement égale à -1,0,1 si l'élément est négatif, nul ou positif, **Min(X)** est une matrice dont les éléments donnent les valeurs inférieures de deux éléments consécutifs d'une ligne de la matrice **X**, **C$_{k-1}$** est la matrice de code pour le bloc de symboles d'information précédent et

$$S_k = \begin{pmatrix} s_{k,1} & s_{k,2} & s_{k,3} & s_{k,4} \\ s_{k,1}\Omega & s_{k,2}\Omega & s_{k,3}\Omega & s_{k,4}\Omega \\ s_{k,2}\Omega & s_{k,1} & s_{k,4}\Omega & s_{k,3} \\ s_{k,2} & s_{k,1}\Omega & s_{k,4} & s_{k,3}\Omega \\ s_{k,3}\Omega & s_{k,4} & s_{k,1} & s_{k,2}\Omega \\ s_{k,3} & s_{k,4}\Omega & s_{k,1}\Omega & s_{k,2} \\ s_{k,4}\Omega & s_{k,3}\Omega & s_{k,2} & s_{k,1} \\ s_{k,4} & s_{k,3} & s_{k,2}\Omega & s_{k,1}\Omega \end{pmatrix}$$

une ligne de la matrice **C$_k$** correspondant à une utilisation du canal de transmission et une colonne de la matrice correspondant à un élément radiatif, la matrice **C$_k$** étant définie à une permutation près de ses lignes et/ou ses colonnes et $\Omega$ étant une permutation des deux positions de modulation PPM.

Selon un troisième mode de réalisation, l'invention est définie par un procédé de codage spatio-temporel différentiel pour système de transmission UWB à huit éléments radiatifs, ledit procédé codant un bloc $\sigma_k$ = (s$_{k,1}$,s$_{k,2}$, s$_{k,3}$,s$_{k,4}$,s$_{k,5}$,s$_{k,6}$,s$_{k,7}$,s$_{k,8}$) de huit symboles d'information appartenant à un alphabet de modulation 2-PPM, en une séquence de huit vecteurs à deux composantes, les composantes d'un vecteur étant destinées à moduler en position un signal UWB impulsionnel pour un élément radiatif dudit système et une utilisation de canal de transmission donnés, chaque composante correspondant à une position de modulation PPM. Lesdits vecteurs sont obtenus à partir des éléments de la matrice de code :

$$C_k = \begin{pmatrix} c_{k,1} & c_{k,2} & c_{k,3} & c_{k,4} & c_{k,5} & c_{k,6} & c_{k,7} & c_{k,8} \\ c_{k,2}\Omega & c_{k,1} & c_{k,4} & c_{k,3}\Omega & c_{k,6} & c_{k,5}\Omega & c_{k,8}\Omega & c_{k,7} \\ c_{k,3}\Omega & c_{k,4}\Omega & c_{k,1} & c_{k,2} & c_{k,7} & c_{k,8} & c_{k,5}\Omega & c_{k,6}\Omega \\ c_{k,4}\Omega & c_{k,3} & c_{k,2}\Omega & c_{k,1} & c_{k,8} & c_{k,7}\Omega & c_{k,6} & c_{k,5}\Omega \\ c_{k,5}\Omega & c_{k,6}\Omega & c_{k,7}\Omega & c_{k,8}\Omega & c_{k,1} & c_{k,2} & c_{k,3} & c_{k,4} \\ c_{k,6}\Omega & c_{k,5}\Omega & c_{k,8}\Omega & c_{k,7} & c_{k,2}\Omega & c_{k,1} & c_{k,4}\Omega & c_{k,3} \\ c_{k,7}\Omega & c_{k,8} & c_{k,5} & c_{k,6}\Omega & c_{k,3}\Omega & c_{k,4} & c_{k,1} & c_{k,2}\Omega \\ c_{k,8}\Omega & c_{k,7}\Omega & c_{k,6} & c_{k,5} & c_{k,4}\Omega & c_{k,3}\Omega & c_{k,2} & c_{k,1} \end{pmatrix}$$

avec $C_k = \mathbf{sgn}\left(C_k^{\circ} - \left[\mathbf{Min}\left(C_k^{\circ}\right) \otimes \mathbf{u}_1\right]\right)$, $C_k^{\circ} = C_{k-1}S_k$ , $\mathbf{u}_1 = \begin{pmatrix} 1 & 1 \end{pmatrix}$, $\otimes$ est le produit de Kronecker, **sgn(X)** est la matrice donnant les valeurs de signe des éléments de **X**, la valeur de signe étant respectivement égale à -1,0,1 si l'élément est négatif, nul ou positif, **Min(X)** est une matrice dont les éléments donnent les valeurs inférieures de deux éléments consécutifs d'une ligne de la matrice **X**, **C$_{k-1}$** est la matrice de code pour le bloc de symboles d'information précédent et

$$S_k = \begin{pmatrix}
s_{k,1} & s_{k,2} & s_{k,3} & s_{k,4} & s_{k,5} & s_{k,6} & s_{k,7} & s_{k,8} \\
s_{k,1}\Omega & s_{k,2}\Omega & s_{k,3}\Omega & s_{k,4}\Omega & s_{k,5}\Omega & s_{k,6}\Omega & s_{k,7}\Omega & s_{k,8}\Omega \\
s_{k,2}\Omega & s_{k,1} & s_{k,4} & s_{k,3}\Omega & s_{k,6} & s_{k,5}\Omega & s_{k,8}\Omega & s_{k,7} \\
s_{k,2} & s_{k,1}\Omega & s_{k,4}\Omega & s_{k,3} & s_{k,6}\Omega & s_{k,5} & s_{k,8} & s_{k,7}\Omega \\
s_{k,3}\Omega & s_{k,4}\Omega & s_{k,1} & s_{k,2} & s_{k,7} & s_{k,8} & s_{k,5}\Omega & s_{k,6}\Omega \\
s_{k,3} & s_{k,4} & s_{k,1}\Omega & s_{k,2}\Omega & s_{k,7}\Omega & s_{k,8}\Omega & s_{k,5} & s_{k,6} \\
s_{k,4}\Omega & s_{k,3} & s_{k,2}\Omega & s_{k,1} & s_{k,8} & s_{k,7}\Omega & s_{k,6} & s_{k,5}\Omega \\
s_{k,4} & s_{k,3}\Omega & s_{k,2} & s_{k,1}\Omega & s_{k,8}\Omega & s_{k,7} & s_{k,6}\Omega & s_{k,5} \\
s_{k,5}\Omega & s_{k,6}\Omega & s_{k,7}\Omega & s_{k,8}\Omega & s_{k,1} & s_{k,2} & s_{k,3} & s_{k,4} \\
s_{k,5} & s_{k,6} & s_{k,7} & s_{k,8} & s_{k,1}\Omega & s_{k,2}\Omega & s_{k,3}\Omega & s_{k,4}\Omega \\
s_{k,6}\Omega & s_{k,5} & s_{k,8}\Omega & s_{k,7} & s_{k,2}\Omega & s_{k,1} & s_{k,4}\Omega & s_{k,3} \\
s_{k,6} & s_{k,5}\Omega & s_{k,8} & s_{k,7}\Omega & s_{k,2} & s_{k,1}\Omega & s_{k,4} & s_{k,3}\Omega \\
s_{k,7}\Omega & s_{k,8} & s_{k,5} & s_{k,6}\Omega & s_{k,3}\Omega & s_{k,4} & s_{k,1} & s_{k,2}\Omega \\
s_{k,7} & s_{k,8}\Omega & s_{k,5}\Omega & s_{k,6} & s_{k,3} & s_{k,4}\Omega & s_{k,1}\Omega & s_{k,2} \\
s_{k,8}\Omega & s_{k,7}\Omega & s_{k,6} & s_{k,5} & s_{k,4}\Omega & s_{k,3}\Omega & s_{k,2} & s_{k,1} \\
s_{k,8} & s_{k,7} & s_{k,6}\Omega & s_{k,5}\Omega & s_{k,4} & s_{k,3} & s_{k,2}\Omega & s_{k,1}\Omega
\end{pmatrix}$$

une ligne de la matrice $C_k$ correspondant à une utilisation du canal de transmission et une colonne de la matrice correspondant à un élément radiatif, la matrice $C_k$ étant définie à une permutation près de ses lignes et/ou ses colonnes et $\Omega$ étant une permutation des deux positions de modulation PPM.

L'invention concerne également un système de transmission UWB à deux éléments radiatifs, pour mettre en oeuvre le procédé selon le premier mode de réalisation. Ce système de transmission comprend :

- des moyens de codage pour coder un bloc $\sigma_k = (s_{k,1}, s_{k,2})$ de deux symboles d'information appartenant à un alphabet de modulation 2-PPM, en une séquence de deux vecteurs à deux composantes, les composantes d'un vecteur étant destinées à moduler en position un signal UWB impulsionnel pour un élément radiatif dudit système et une utilisation de canal de transmission donnés, chaque composante correspondant à une position de modulation PPM, les moyens de codage obtenant lesdits vecteurs à partir des éléments de la matrice de code :

$$C_k = \begin{pmatrix} c_{k,1} & c_{k,2} \\ c_{k,2}\Omega & c_{k,1} \end{pmatrix}$$

avec $C_k = \mathbf{sgn}\left(C_k^{\circ} - \left[\mathbf{Min}\left(C_k^{\circ}\right) \otimes u_1\right]\right)$, $C_k^{\circ} = C_{k-1}S_k$, $u_1 = \begin{pmatrix} 1 & 1 \end{pmatrix}$, $\otimes$ est le produit de Kronecker, $\mathbf{sgn(X)}$ est la matrice donnant les valeurs de signe des éléments de $X$, la valeur de signe étant respectivement égale à -1,0,1 si l'élément est négatif, nul ou positif, $\mathbf{Min(X)}$ est une matrice dont les éléments donnent les valeurs inférieures de deux éléments consécutifs d'une ligne de la matrice $X$, $C_{k-1}$ est la matrice de code pour le bloc de symboles d'information précédent et

$$S_k = \begin{pmatrix} s_{k,1} & s_{k,2} \\ s_{k,1}\Omega & s_{k,2}\Omega \\ s_{k,2}\Omega & s_{k,1} \\ s_{k,2} & s_{k,1}\Omega \end{pmatrix}$$

une ligne de la matrice $C_k$ correspondant à une utilisation du canal de transmission et une colonne de la matrice correspondant à un élément radiatif, la matrice $C_k$ étant définie à une permutation près de ses lignes et/ou ses colonnes et $\Omega$ étant une permutation des deux positions de modulation PPM ;

- deux modulateurs pour moduler en position un signal UWB impulsionnel, chaque modulateur étant associé à un élément radiatif et modulant en position ledit signal, pendant une utilisation du canal de transmission, à l'aide des composantes du vecteur associé au dit élément radiatif et à ladite utilisation du canal ;
- chaque élément radiatif étant adapté à émettre le signal ainsi modulé par ledit modulateur associé.

L'invention concerne également un système de transmission UWB à quatre éléments radiatifs, pour mettre en oeuvre le procédé selon le second mode de réalisation. Ce système de transmission comprend :

- des moyens de codage pour coder un bloc $\sigma_k=(s_{k,1},s_{k,2},s_{k,3},s_{k,4})$ de quatre symboles d'information appartenant à un alphabet de modulation 2-PPM, en une séquence de quatre vecteurs à deux composantes, les composantes d'un vecteur étant destinées à moduler en position un signal UWB impulsionnel pour un élément radiatif dudit système et une utilisation de canal de transmission donnés, chaque composante correspondant à une position de modulation PPM, les moyens de codage obtenant lesdits vecteurs à partir des éléments de la matrice de code :

$$C_k = \begin{pmatrix} c_{k,1} & c_{k,2} & c_{k,3} & c_{k,4} \\ c_{k,2}\Omega & c_{k,1} & c_{k,4}\Omega & c_{k,3} \\ c_{k,3}\Omega & c_{k,4} & c_{k,1} & c_{k,2}\Omega \\ c_{k,4}\Omega & c_{k,3}\Omega & c_{k,2} & c_{k,1} \end{pmatrix}$$

avec $C_k = \mathbf{sgn}\left(C_k^\circ - \left[\mathbf{Min}\left(C_k^\circ\right) \otimes u_1\right]\right)$, $C_k^\circ = C_{k-1}S_k$, $u_1 = \begin{pmatrix} 1 & 1 \end{pmatrix}$, $\otimes$ est le produit de Kronecker, sgn(X) est la matrice donnant les valeurs de signe des éléments de X, la valeur de signe étant respectivement égale à -1,0,1 si l'élément est négatif, nul ou positif, Min(X) est une matrice dont les éléments donnent les valeurs inférieures de deux éléments consécutifs d'une ligne de la matrice X, $C_{k-1}$ est la matrice de code pour le bloc de symboles d'information précédent et

$$S_k = \begin{pmatrix} s_{k,1} & s_{k,2} & s_{k,3} & s_{k,4} \\ s_{k,1}\Omega & s_{k,2}\Omega & s_{k,3}\Omega & s_{k,4}\Omega \\ s_{k,2}\Omega & s_{k,1} & s_{k,4}\Omega & s_{k,3} \\ s_{k,2} & s_{k,1}\Omega & s_{k,4} & s_{k,3}\Omega \\ s_{k,3}\Omega & s_{k,4} & s_{k,1} & s_{k,2}\Omega \\ s_{k,3} & s_{k,4}\Omega & s_{k,1}\Omega & s_{k,2} \\ s_{k,4}\Omega & s_{k,3}\Omega & s_{k,2} & s_{k,1} \\ s_{k,4} & s_{k,3} & s_{k,2}\Omega & s_{k,1}\Omega \end{pmatrix}$$

une ligne de la matrice $C_k$ correspondant à une utilisation du canal de transmission et une colonne de la matrice correspondant à un élément radiatif, la matrice $C_k$ étant définie à une permutation près de ses lignes et/ou ses colonnes et $\Omega$ étant une permutation des deux positions de modulation PPM ;

- quatre modulateurs pour moduler en position un signal UWB impulsionnel, chaque modulateur étant associé à un élément radiatif et modulant en position ledit signal, pendant une utilisation du canal de transmission, à l'aide des composantes du vecteur associé au dit élément radiatif et à ladite utilisation du canal ;
- chaque élément radiatif étant adapté à émettre le signal ainsi modulé par ledit modulateur associé.

L'invention concerne également un système de transmission UWB à huit éléments radiatifs, pour mettre en oeuvre le procédé selon le troisième mode de réalisation. Ce système de transmission comprend :

- des moyens de codage pour coder un bloc $\sigma_k = (s_{k,1}, s_{k,2}, s_{k,3}, s_{k,4}, s_{k,5}, s_{k,6}, s_{k,7}, s_{k,8})$ de huit symboles d'information appartenant à un alphabet de modulation 2-PPM, en une séquence de huit vecteurs à deux composantes, les composantes d'un vecteur étant destinées à moduler en position un signal UWB impulsionnel pour un élément radiatif dudit système et une utilisation de canal de transmission donnés, chaque composante correspondant à une position de modulation PPM, les moyens de codage obtenant lesdits vecteurs à partir des éléments de la matrice de code :

$$C_k = \begin{pmatrix} c_{k,1} & c_{k,2} & c_{k,3} & c_{k,4} & c_{k,5} & c_{k,6} & c_{k,7} & c_{k,8} \\ c_{k,2}\Omega & c_{k,1} & c_{k,4} & c_{k,3}\Omega & c_{k,6} & c_{k,5}\Omega & c_{k,8}\Omega & c_{k,7} \\ c_{k,3}\Omega & c_{k,4}\Omega & c_{k,1} & c_{k,2} & c_{k,7} & c_{k,8} & c_{k,5}\Omega & c_{k,6}\Omega \\ c_{k,4}\Omega & c_{k,3} & c_{k,2}\Omega & c_{k,1} & c_{k,8} & c_{k,7}\Omega & c_{k,6} & c_{k,5}\Omega \\ c_{k,5}\Omega & c_{k,6}\Omega & c_{k,7}\Omega & c_{k,8}\Omega & c_{k,1} & c_{k,2} & c_{k,3} & c_{k,4} \\ c_{k,6}\Omega & c_{k,5}\Omega & c_{k,8}\Omega & c_{k,7} & c_{k,2}\Omega & c_{k,1} & c_{k,4}\Omega & c_{k,3} \\ c_{k,7}\Omega & c_{k,8} & c_{k,5} & c_{k,6}\Omega & c_{k,3}\Omega & c_{k,4} & c_{k,1} & c_{k,2}\Omega \\ c_{k,8}\Omega & c_{k,7}\Omega & c_{k,6} & c_{k,5} & c_{k,4}\Omega & c_{k,3}\Omega & c_{k,2} & c_{k,1} \end{pmatrix}$$

avec $C_k = \mathbf{sgn}\left( C_k^{\circ} - \left[ \mathbf{Min}\left( C_k^{\circ} \right) \otimes u_1 \right] \right)$, $C_k^{\circ} = C_{k-1}S_k$ , $u_1 = \begin{pmatrix} 1 & 1 \end{pmatrix}$ , $\otimes$ est le produit de Kronecker, **sgn(X)** est la matrice donnant les valeurs de signe des éléments de **X**, la valeur de signe étant respectivement égale à -1,0,1 si l'élément est négatif, nul ou positif, **Min(X)** est une matrice dont les éléments donnent les valeurs inférieures de deux éléments consécutifs d'une ligne de la matrice **X**, $C_{k-1}$ est la matrice de code pour le bloc de symboles d'information précédent et

$$S_k = \begin{pmatrix}
s_{k,1} & s_{k,2} & s_{k,3} & s_{k,4} & s_{k,5} & s_{k,6} & s_{k,7} & s_{k,8} \\
s_{k,1}\Omega & s_{k,2}\Omega & s_{k,3}\Omega & s_{k,4}\Omega & s_{k,5}\Omega & s_{k,6}\Omega & s_{k,7}\Omega & s_{k,8}\Omega \\
s_{k,2}\Omega & s_{k,1} & s_{k,4} & s_{k,3}\Omega & s_{k,6} & s_{k,5}\Omega & s_{k,8}\Omega & s_{k,7} \\
s_{k,2} & s_{k,1}\Omega & s_{k,4}\Omega & s_{k,3} & s_{k,6}\Omega & s_{k,5} & s_{k,8} & s_{k,7}\Omega \\
s_{k,3}\Omega & s_{k,4}\Omega & s_{k,1} & s_{k,2} & s_{k,7} & s_{k,8} & s_{k,5}\Omega & s_{k,6}\Omega \\
s_{k,3} & s_{k,4} & s_{k,1}\Omega & s_{k,2}\Omega & s_{k,7}\Omega & s_{k,8}\Omega & s_{k,5} & s_{k,6} \\
s_{k,4}\Omega & s_{k,3} & s_{k,2}\Omega & s_{k,1} & s_{k,8} & s_{k,7}\Omega & s_{k,6} & s_{k,5}\Omega \\
s_{k,4} & s_{k,3}\Omega & s_{k,2} & s_{k,1}\Omega & s_{k,8}\Omega & s_{k,7} & s_{k,6}\Omega & s_{k,5} \\
s_{k,5}\Omega & s_{k,6}\Omega & s_{k,7}\Omega & s_{k,8}\Omega & s_{k,1} & s_{k,2} & s_{k,3} & s_{k,4} \\
s_{k,5} & s_{k,6} & s_{k,7} & s_{k,8} & s_{k,1}\Omega & s_{k,2}\Omega & s_{k,3}\Omega & s_{k,4}\Omega \\
s_{k,6}\Omega & s_{k,5} & s_{k,8}\Omega & s_{k,7} & s_{k,2}\Omega & s_{k,1} & s_{k,4}\Omega & s_{k,3} \\
s_{k,6} & s_{k,5}\Omega & s_{k,8} & s_{k,7}\Omega & s_{k,2} & s_{k,1}\Omega & s_{k,4} & s_{k,3}\Omega \\
s_{k,7}\Omega & s_{k,8} & s_{k,5} & s_{k,6}\Omega & s_{k,3}\Omega & s_{k,4} & s_{k,1} & s_{k,2}\Omega \\
s_{k,7} & s_{k,8}\Omega & s_{k,5}\Omega & s_{k,6} & s_{k,3} & s_{k,4}\Omega & s_{k,1}\Omega & s_{k,2} \\
s_{k,8}\Omega & s_{k,7}\Omega & s_{k,6} & s_{k,5} & s_{k,4}\Omega & s_{k,3}\Omega & s_{k,2} & s_{k,1} \\
s_{k,8} & s_{k,7} & s_{k,6}\Omega & s_{k,5}\Omega & s_{k,4} & s_{k,3} & s_{k,2}\Omega & s_{k,1}\Omega
\end{pmatrix}$$

une ligne de la matrice $C_k$ correspondant à une utilisation du canal de transmission et une colonne de la matrice correspondant à un élément radiatif, la matrice $C_k$ étant définie à une permutation près de ses lignes et/ou ses colonnes et $\Omega$ étant une permutation des deux positions de modulation PPM ;

- huit modulateurs pour moduler en position un signal UWB impulsionnel, chaque modulateur étant associé à un élément radiatif et modulant en position ledit signal, pendant une utilisation du canal de transmission, à l'aide des composantes du vecteur associé au dit élément radiatif et à ladite utilisation du canal ;
- chaque élément radiatif étant adapté à émettre le signal ainsi modulé par ledit modulateur associé.

Selon une première variante, les éléments radiatifs du système de transmission sont des antennes UWB. Selon une seconde variante, les éléments radiatifs du système de transmission sont des diodes laser ou des diodes électroluminescentes.

Ledit signal impulsionnel peut être un signal TH-UWB, un signal DS-UWB, ou un signal TH-DS-UWB.

L'invention concerne enfin un système de réception UWB comportant une pluralité ($Q'$) de capteurs destinés à recevoir un signal UWB impulsionnel transmis par un système de transmission tel que défini ci-dessus, dans lequel :

- chaque capteur est relié à un filtre Rake comprenant une pluralité ($L$) de doigts, chaque doigt suivant un multi-trajet du canal de propagation associé à ce capteur, chaque doigt $q = 1,..,Q'L$ fournissant une valeur de variable de décision, $y_{k,i,q,m}$, pour la $m$-ième position de modulation pendant le $i$-ième temps symbole du $k$-ième temps bloc ;
- un module de calcul recevant lesdites valeurs de variables de décision et calculant :

• pour chaque temps bloc $k$ et chaque temps symbole $i$ = 1,...,$P$, le vecteur ligne $Y_{k,i}$ défini par

$$Y_{k,i} = \sum_{q=1}^{Q} \begin{pmatrix} y_{k,i,q,1} & y_{k,i,q,2} \end{pmatrix} \otimes e_q$$ où $e_q$ est le $q$-ième vecteur ligne de la matrice identité $I_Q$, de taille $Q \times Q$ ;

• pour chaque temps bloc $k$, la matrice $Y_k$ de taille $P \times 2QP$, où $P$ est le nombre d'antennes du système de transmission, définie par :

Si $P$=2 :

$$\mathbf{Y_k} = \begin{pmatrix} \mathbf{Y_{k,1}} & \mathbf{Y_{k,2}} \\ \mathbf{Y_{k,2}\Omega_Q} & \mathbf{Y_{k,1}} \end{pmatrix}$$

Si $P$=4 :

$$\mathbf{Y_k} = \begin{pmatrix} \mathbf{Y_{k,1}} & \mathbf{Y_{k,2}} & \mathbf{Y_{k,3}} & \mathbf{Y_{k,4}} \\ \mathbf{Y_{k,2}\Omega_Q} & \mathbf{Y_{k,1}} & \mathbf{Y_{k,4}\Omega_Q} & \mathbf{Y_{k,2}} \\ \mathbf{Y_{k,3}\Omega_Q} & \mathbf{Y_{k,4}} & \mathbf{Y_{k,1}} & \mathbf{Y_{k,2}\Omega_Q} \\ \mathbf{Y_{k,4}\Omega_Q} & \mathbf{Y_{k,3}\Omega_Q} & \mathbf{Y_{k,2}} & \mathbf{Y_{k,1}} \end{pmatrix}$$

Si $P$=8 :

$$\mathbf{Y_k} = \begin{pmatrix} \mathbf{Y_{k,1}} & \mathbf{Y_{k,2}} & \mathbf{Y_{k,3}} & \mathbf{Y_{k,4}} & \mathbf{Y_{k,5}} & \mathbf{Y_{k,6}} & \mathbf{Y_{k,7}} & \mathbf{Y_{k,8}} \\ \mathbf{Y_{k,2}\Omega_Q} & \mathbf{Y_{k,1}} & \mathbf{Y_{k,4}} & \mathbf{Y_{k,3}\Omega_Q} & \mathbf{Y_{k,6}} & \mathbf{Y_{k,5}\Omega_Q} & \mathbf{Y_{k,8}\Omega_Q} & \mathbf{Y_{k,7}} \\ \mathbf{Y_{k,3}\Omega_Q} & \mathbf{Y_{k,4}\Omega_Q} & \mathbf{Y_{k,1}} & \mathbf{Y_{k,2}} & \mathbf{Y_{k,7}} & \mathbf{Y_{k,8}} & \mathbf{Y_{k,5}\Omega_Q} & \mathbf{Y_{k,6}\Omega_Q} \\ \mathbf{Y_{k,4}\Omega_Q} & \mathbf{Y_{k,3}} & \mathbf{Y_{k,2}\Omega_Q} & \mathbf{Y_{k,1}} & \mathbf{Y_{k,8}} & \mathbf{Y_{k,7}\Omega_Q} & \mathbf{Y_{k,6}} & \mathbf{Y_{k,5}\Omega_Q} \\ \mathbf{Y_{k,5}\Omega_Q} & \mathbf{Y_{k,6}\Omega_Q} & \mathbf{Y_{k,7}\Omega_Q} & \mathbf{Y_{k,8}\Omega_Q} & \mathbf{Y_{k,1}} & \mathbf{Y_{k,2}} & \mathbf{Y_{k,3}} & \mathbf{Y_{k,4}} \\ \mathbf{Y_{k,6}\Omega_Q} & \mathbf{Y_{k,5}} & \mathbf{Y_{k,8}\Omega_Q} & \mathbf{Y_{k,7}} & \mathbf{Y_{k,2}\Omega_Q} & \mathbf{Y_{k,1}} & \mathbf{Y_{k,4}\Omega_Q} & \mathbf{Y_{k,3}} \\ \mathbf{Y_{k,7}\Omega_Q} & \mathbf{Y_{k,8}} & \mathbf{Y_{k,5}} & \mathbf{Y_{k,6}} & \mathbf{Y_{k,3}\Omega_Q} & \mathbf{Y_{k,4}} & \mathbf{Y_{k,1}} & \mathbf{Y_{k,2}\Omega_Q} \\ \mathbf{Y_{k,8}\Omega_Q} & \mathbf{Y_{k,7}\Omega_Q} & \mathbf{Y_{k,6}\Omega_Q} & \mathbf{Y_{k,5}} & \mathbf{Y_{k,4}\Omega_Q} & \mathbf{Y_{k,3}\Omega_Q} & \mathbf{Y_{k,2}} & \mathbf{Y_{k,1}} \end{pmatrix}$$

où $\Omega_Q$ est une matrice donnée par $\Omega_Q = \Omega \otimes I_Q$ où $I_Q$ est la matrice identité de taille $Q \times Q$ et $\Omega$ est la matrice de permutation des deux positions de modulation PPM,

- un module de détection estimant les $P$ symboles d'information transmis pendant le temps bloc $k$ par

$$\left( \hat{s}_{k,1}, \hat{s}_{k,2}, ..., \hat{s}_{k,P} \right) = \underset{s_{k,1}, s_{k,2}, ..., s_{k,P}}{\arg\max} \left\{ trace\left( \mathbf{Y_{k,i}} \left( \mathbf{S_k} \otimes \mathbf{I_Q} \right) \mathbf{Y_k^T} \right) \right\}$$ où $\otimes$ est le produit de Kronecker et

si $P$=2, $\mathbf{S_k}$ est donnée par :

$$\mathbf{S_k} = \begin{pmatrix} \mathbf{s_{k,1}} & \mathbf{s_{k,2}} \\ \mathbf{s_{k,1}\Omega} & \mathbf{s_{k,2}\Omega} \\ \mathbf{s_{k,2}\Omega} & \mathbf{s_{k,1}} \\ \mathbf{s_{k,2}} & \mathbf{s_{k,1}\Omega} \end{pmatrix}$$

si $P$=4, $\mathbf{S_k}$ est une donnée par :

$$S_k = \begin{pmatrix} s_{k,1} & s_{k,2} & s_{k,3} & s_{k,4} \\ s_{k,1}\Omega & s_{k,2}\Omega & s_{k,3}\Omega & s_{k,4}\Omega \\ s_{k,2}\Omega & s_{k,1} & s_{k,4}\Omega & s_{k,3} \\ s_{k,2} & s_{k,1}\Omega & s_{k,4} & s_{k,3}\Omega \\ s_{k,3}\Omega & s_{k,4} & s_{k,1} & s_{k,2}\Omega \\ s_{k,3} & s_{k,4}\Omega & s_{k,1}\Omega & s_{k,2} \\ s_{k,4}\Omega & s_{k,3}\Omega & s_{k,2} & s_{k,1} \\ s_{k,4} & s_{k,3} & s_{k,2}\Omega & s_{k,1}\Omega \end{pmatrix}$$

si $P=8$, $S_k$ est donnée par :

$$S_k = \begin{pmatrix} s_{k,1} & s_{k,2} & s_{k,3} & s_{k,4} & s_{k,5} & s_{k,6} & s_{k,7} & s_{k,8} \\ s_{k,1}\Omega & s_{k,2}\Omega & s_{k,3}\Omega & s_{k,4}\Omega & s_{k,5}\Omega & s_{k,6}\Omega & s_{k,7}\Omega & s_{k,8}\Omega \\ s_{k,2}\Omega & s_{k,1} & s_{k,4} & s_{k,3}\Omega & s_{k,6} & s_{k,5}\Omega & s_{k,8}\Omega & s_{k,7} \\ s_{k,2} & s_{k,1}\Omega & s_{k,4}\Omega & s_{k,3} & s_{k,6}\Omega & s_{k,5} & s_{k,8} & s_{k,7}\Omega \\ s_{k,3}\Omega & s_{k,4}\Omega & s_{k,1} & s_{k,2} & s_{k,7} & s_{k,8} & s_{k,5}\Omega & s_{k,6}\Omega \\ s_{k,3} & s_{k,4} & s_{k,1}\Omega & s_{k,2}\Omega & s_{k,7}\Omega & s_{k,8}\Omega & s_{k,5} & s_{k,6} \\ s_{k,4}\Omega & s_{k,3} & s_{k,2}\Omega & s_{k,1} & s_{k,8} & s_{k,7}\Omega & s_{k,6} & s_{k,5}\Omega \\ s_{k,4} & s_{k,3}\Omega & s_{k,2} & s_{k,1}\Omega & s_{k,8}\Omega & s_{k,7} & s_{k,6}\Omega & s_{k,5} \\ s_{k,5}\Omega & s_{k,6}\Omega & s_{k,7}\Omega & s_{k,8}\Omega & s_{k,1} & s_{k,2} & s_{k,3} & s_{k,4} \\ s_{k,5} & s_{k,6} & s_{k,7} & s_{k,8} & s_{k,1}\Omega & s_{k,2}\Omega & s_{k,3}\Omega & s_{k,4}\Omega \\ s_{k,6}\Omega & s_{k,5} & s_{k,8}\Omega & s_{k,7} & s_{k,2}\Omega & s_{k,1} & s_{k,4}\Omega & s_{k,3} \\ s_{k,6} & s_{k,5}\Omega & s_{k,8} & s_{k,7}\Omega & s_{k,2} & s_{k,1}\Omega & s_{k,4} & s_{k,3}\Omega \\ s_{k,7}\Omega & s_{k,8} & s_{k,5} & s_{k,6}\Omega & s_{k,3}\Omega & s_{k,4} & s_{k,1} & s_{k,2}\Omega \\ s_{k,7} & s_{k,8}\Omega & s_{k,5}\Omega & s_{k,6} & s_{k,3} & s_{k,4}\Omega & s_{k,1}\Omega & s_{k,2} \\ s_{k,8}\Omega & s_{k,7}\Omega & s_{k,6} & s_{k,5} & s_{k,4}\Omega & s_{k,3}\Omega & s_{k,2} & s_{k,1} \\ s_{k,8} & s_{k,7} & s_{k,6}\Omega & s_{k,5}\Omega & s_{k,4} & s_{k,3} & s_{k,2}\Omega & s_{k,1}\Omega \end{pmatrix}$$

où $s_{k,1}, s_{k,2}, \dots, s_{k,P}$ sont les symboles d'information 2-PPM possibles.

Selon une première variante, les capteurs sont des antennes UWB. Selon une seconde variante, les capteurs sont des photodétecteurs.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

la Fig. 1 représente schématiquement un système de transmission MIMO utilisant un code STBC connu de l'état de la technique ;
la Fig. 2 représente schématiquement un système de transmission MIMO utilisant un code spatio-temporel différentiel connu de l'état de la technique ;

les Fig. 3A à 3C représentent les formes respectives de signaux TH-UWB, DS-UWB et TH-DS-UWB ;

la Fig. 4 représente un alphabet de modulation *M*-PPM-*M'*-PPM ;

la Fig. 5 représente schématiquement un système de transmission UWB multi-antenne selon un mode de réalisation de l'invention ;

la Fig. 6 représente schématiquement un système de réception selon un mode de réalisation de l'invention ;

les Figs 7A et 7B montrent les courbes de taux d'erreur binaire en fonction du rapport signal sur bruit d'un système MIMO UWB impulsionnel selon l'invention, respectivement en absence et en présence d'interférence entre impulsions.

## EXPOSÉ DÉTAILLÉ DE MODES DE RÉALISATION PARTICULIERS

L'idée à la base de l'invention est de concevoir un code spatio-temporel différentiel dont la diversité de codage est obtenue grâce à un opérateur de permutation agissant sur les positions de modulation de symboles d'information appartenant à un alphabet 2-PPM, dit aussi PPM binaire.

On considérera dans la suite un système de transmission UWB impulsionnel à *P* antennes de transmission et plus généralement, à *P* éléments radiatifs. Le code spatio-temporel utilisé par le système est défini par la matrice suivante, de dimension $P \times 2P$,

Pour $P = 2$ :

$$
\mathbf{C_k} = \begin{pmatrix} \mathbf{c_{k,1}} & \mathbf{c_{k,2}} \\ \mathbf{c_{k,2}\Omega} & \mathbf{c_{k,1}} \end{pmatrix} \; ;
$$

$$(19)$$

Pour $P = 4$ :

$$
\mathbf{C_k} = \begin{pmatrix} \mathbf{c_{k,1}} & \mathbf{c_{k,2}} & \mathbf{c_{k,3}} & \mathbf{c_{k,4}} \\ \mathbf{c_{k,2}\Omega} & \mathbf{c_{k,1}} & \mathbf{c_{k,4}\Omega} & \mathbf{c_{k,3}} \\ \mathbf{c_{k,3}\Omega} & \mathbf{c_{k,4}} & \mathbf{c_{k,1}} & \mathbf{c_{k,2}\Omega} \\ \mathbf{c_{k,4}\Omega} & \mathbf{c_{k,3}\Omega} & \mathbf{c_{k,2}} & \mathbf{c_{k,1}} \end{pmatrix} \; ;
$$

$$(20)$$

Pour $P = 8$ :

$$\mathbf{C_k} = \begin{pmatrix} c_{k,1} & c_{k,2} & c_{k,3} & c_{k,4} & c_{k,5} & c_{k,6} & c_{k,7} & c_{k,8} \\ c_{k,2}\Omega & c_{k,1} & c_{k,4} & c_{k,3}\Omega & c_{k,6} & c_{k,5}\Omega & c_{k,8}\Omega & c_{k,7} \\ c_{k,3}\Omega & c_{k,4}\Omega & c_{k,1} & c_{k,2} & c_{k,7} & c_{k,8} & c_{k,5}\Omega & c_{k,6}\Omega \\ c_{k,4}\Omega & c_{k,3} & c_{k,2}\Omega & c_{k,1} & c_{k,8} & c_{k,7}\Omega & c_{k,6} & c_{k,5}\Omega \\ c_{k,5}\Omega & c_{k,6}\Omega & c_{k,7}\Omega & c_{k,8}\Omega & c_{k,1} & c_{k,2} & c_{k,3} & c_{k,4} \\ c_{k,6}\Omega & c_{k,5}\Omega & c_{k,8}\Omega & c_{k,7} & c_{k,2}\Omega & c_{k,1} & c_{k,4}\Omega & c_{k,3} \\ c_{k,7}\Omega & c_{k,8} & c_{k,5} & c_{k,6}\Omega & c_{k,3}\Omega & c_{k,4} & c_{k,1} & c_{k,2}\Omega \\ c_{k,8}\Omega & c_{k,7}\Omega & c_{k,6} & c_{k,5} & c_{k,4}\Omega & c_{k,3}\Omega & c_{k,2} & c_{k,1} \end{pmatrix} ;$$

$$(21)$$

où les $\mathbf{c_{k,i}}$, $i = 1,..,P$ sont des vecteurs ligne de dimension 2 et $\Omega$ est la matrice de permutation :

$$\Omega = \begin{pmatrix} 0 & 1 \\ 1 & 0 \end{pmatrix} \qquad (22)$$

La matrice du code spatio-temporel différentiel $\mathbf{C_k}$ est obtenue par la relation de récurrence :

$$\mathbf{C_k} = \mathbf{sgn}\left( \mathbf{C_k^\circ} - \left[ \mathbf{Min}\left( \mathbf{C_k^\circ} \right) \otimes \mathbf{u_1} \right] \right)$$

$$\mathbf{C_k^\circ} = \mathbf{C_{k-1}S_k} \qquad (23)$$

où $\mathbf{S_k}$ est une matrice de taille $2P \times 2P$ ne dépendant que des symboles d'information, $\mathbf{u_1}$=(1 1), $\otimes$ est le produit de Kronecker et **sgn(X)** est la matrice donnant pour chaque élément $x$ le signe de $x$, défini comme sgn($x$)=1 si $x$>0, sgn($x$) =-1 si $x$<0 et sgn(0)=0, et **Min(X)** est une matrice dont les éléments donnent les valeurs inférieures de deux éléments consécutifs d'une ligne de la matrice **X**, à savoir si **X** est une matrice de taille $P \times 2P$ **Min(X)** est définie par la matrice de taille $P \times P$ dont les éléments sont :

$$\min\left( x_{i,j,1}, x_{i,j,2} \right), \quad i = 1,..,P, \quad j = 1,..,P \qquad (24)$$

**X** étant considérée comme matrice bloc composée de $P^2$ matrices $\mathbf{x_{i,j}} = (x_{i,j,1} \; x_{i,j,2})$ de taille 1×2.

Par exemple si la matrice $\mathbf{X} = \begin{pmatrix} 0 & 1 & -1 & 7 \\ 4 & 1 & 2 & 3 \end{pmatrix}$, $\mathbf{x_{1,1}}$ = (0 1); $\mathbf{x_{1,2}}$ = (-1 7); $\mathbf{x_{2,1}}$ = (4 1) ; $\mathbf{x_{2,2}}$ = (2 3) et

$\mathbf{Min}(\mathbf{X}) = \begin{pmatrix} 0 & -1 \\ 1 & 2 \end{pmatrix}$, d'où $\mathbf{Min}(\mathbf{X}) \otimes \mathbf{u_1} = \begin{pmatrix} 0 & 0 & -1 & -1 \\ 1 & 1 & 2 & 2 \end{pmatrix}$ et

$$\mathbf{sgn}\left(\mathbf{X} - \mathbf{Min}\left(\mathbf{X}\right) \otimes \mathbf{u_1}\right) = \begin{pmatrix} 0 & 1 & 0 & 1 \\ 1 & 0 & 0 & 1 \end{pmatrix}.$$

La matrice $\mathbf{S_k}$ est fonction du bloc de symboles d'information $\sigma_k = (\mathbf{s_{k,1}}, \mathbf{s_{k,2}}, ..., \mathbf{s_{k,P}})$ où $\mathbf{s_{k,p}} = (s_{k,p,1} \; s_{k,p,2})$ est un symbole 2-PPM égal à (1 0) lorsqu'il correspond à la première position de modulation et à (0 1) lorsqu'il correspond à la seconde position de modulation.

Pour $P$=2, le bloc $\sigma_k$ comprend 2 symboles 2-PPM et $\mathbf{S_k}$ est un matrice de taille 4×4 donnée par :

$$\mathbf{S_k} = \begin{pmatrix} \mathbf{s_{k,1}} & \mathbf{s_{k,2}} \\ \mathbf{s_{k,1}\Omega} & \mathbf{s_{k,2}\Omega} \\ \mathbf{s_{k,2}\Omega} & \mathbf{s_{k,1}} \\ \mathbf{s_{k,2}} & \mathbf{s_{k,1}\Omega} \end{pmatrix} \qquad (25)$$

Pour $P$=4, le bloc $\sigma_k$ comprend 4 symboles 2-PPM et $\mathbf{S_k}$ est une matrice de taille 8×8 donnée par :

$$\mathbf{S_k} = \begin{pmatrix} \mathbf{s_{k,1}} & \mathbf{s_{k,2}} & \mathbf{s_{k,3}} & \mathbf{s_{k,4}} \\ \mathbf{s_{k,1}\Omega} & \mathbf{s_{k,2}\Omega} & \mathbf{s_{k,3}\Omega} & \mathbf{s_{k,4}\Omega} \\ \mathbf{s_{k,2}\Omega} & \mathbf{s_{k,1}} & \mathbf{s_{k,4}\Omega} & \mathbf{s_{k,3}} \\ \mathbf{s_{k,2}} & \mathbf{s_{k,1}\Omega} & \mathbf{s_{k,4}} & \mathbf{s_{k,3}\Omega} \\ \mathbf{s_{k,3}\Omega} & \mathbf{s_{k,4}} & \mathbf{s_{k,1}} & \mathbf{s_{k,2}\Omega} \\ \mathbf{s_{k,3}} & \mathbf{s_{k,4}\Omega} & \mathbf{s_{k,1}\Omega} & \mathbf{s_{k,2}} \\ \mathbf{s_{k,4}\Omega} & \mathbf{s_{k,3}\Omega} & \mathbf{s_{k,2}} & \mathbf{s_{k,1}} \\ \mathbf{s_{k,4}} & \mathbf{s_{k,3}} & \mathbf{s_{k,2}\Omega} & \mathbf{s_{k,1}\Omega} \end{pmatrix} \qquad (26)$$

Pour $P$=8, le bloc $\sigma_k$ comprend 8 symboles 2-PPM et $\mathbf{S_k}$ est une matrice de taille 16×16 donnée par :

$$
\mathbf{S_k} = \begin{pmatrix}
s_{k,1} & s_{k,2} & s_{k,3} & s_{k,4} & s_{k,5} & s_{k,6} & s_{k,7} & s_{k,8} \\
s_{k,1}\Omega & s_{k,2}\Omega & s_{k,3}\Omega & s_{k,4}\Omega & s_{k,5}\Omega & s_{k,6}\Omega & s_{k,7}\Omega & s_{k,8}\Omega \\
s_{k,2}\Omega & s_{k,1} & s_{k,4} & s_{k,3}\Omega & s_{k,6} & s_{k,5}\Omega & s_{k,8}\Omega & s_{k,7} \\
s_{k,2} & s_{k,1}\Omega & s_{k,4}\Omega & s_{k,3} & s_{k,6}\Omega & s_{k,5} & s_{k,8} & s_{k,7}\Omega \\
s_{k,3}\Omega & s_{k,4}\Omega & s_{k,1} & s_{k,2} & s_{k,7} & s_{k,8} & s_{k,5}\Omega & s_{k,6}\Omega \\
s_{k,3} & s_{k,4} & s_{k,1}\Omega & s_{k,2}\Omega & s_{k,7}\Omega & s_{k,8}\Omega & s_{k,5} & s_{k,6} \\
s_{k,4}\Omega & s_{k,3} & s_{k,2}\Omega & s_{k,1} & s_{k,8} & s_{k,7}\Omega & s_{k,6} & s_{k,5}\Omega \\
s_{k,4} & s_{k,3}\Omega & s_{k,2} & s_{k,1}\Omega & s_{k,8}\Omega & s_{k,7} & s_{k,6}\Omega & s_{k,5} \\
s_{k,5}\Omega & s_{k,6}\Omega & s_{k,7}\Omega & s_{k,8}\Omega & s_{k,1} & s_{k,2} & s_{k,3} & s_{k,4} \\
s_{k,5} & s_{k,6} & s_{k,7} & s_{k,8} & s_{k,1}\Omega & s_{k,2}\Omega & s_{k,3}\Omega & s_{k,4}\Omega \\
s_{k,6}\Omega & s_{k,5} & s_{k,8}\Omega & s_{k,7} & s_{k,2}\Omega & s_{k,1} & s_{k,4}\Omega & s_{k,3} \\
s_{k,6} & s_{k,5}\Omega & s_{k,8} & s_{k,7}\Omega & s_{k,2} & s_{k,1}\Omega & s_{k,4} & s_{k,3}\Omega \\
s_{k,7}\Omega & s_{k,8} & s_{k,5} & s_{k,6}\Omega & s_{k,3}\Omega & s_{k,4} & s_{k,1} & s_{k,2}\Omega \\
s_{k,7} & s_{k,8}\Omega & s_{k,5}\Omega & s_{k,6} & s_{k,3} & s_{k,4}\Omega & s_{k,1}\Omega & s_{k,2} \\
s_{k,8}\Omega & s_{k,7}\Omega & s_{k,6} & s_{k,5} & s_{k,4}\Omega & s_{k,3}\Omega & s_{k,2} & s_{k,1} \\
s_{k,8} & s_{k,7} & s_{k,6}\Omega & s_{k,5}\Omega & s_{k,4} & s_{k,3} & s_{k,2}\Omega & s_{k,1}\Omega
\end{pmatrix}
$$

(27)

La matrice $\mathbf{C_0}$, servant à initialiser la relation de récurrence (23) peut être donnée par l'expression (19), (20) ou (21) en choisissant des valeurs de symboles 2-PPM pour $\mathbf{c_{k,1}},...\mathbf{c_{k,P}}$, par exemple $\mathbf{c_{k,1}} = \mathbf{c_{k,2}} =...= \mathbf{c_{k,P}} =(1\ 0)$. Il est cependant clair pour l'homme du métier que d'autres valeurs de $\mathbf{c_{k,1}},...\mathbf{c_{k,P}}$ peuvent être également envisagées.

On peut montrer que si la matrice $\mathbf{C_k}$ est de la forme (19), (20) ou (21) et $\mathbf{S_k}$ est respectivement de la forme (25), (26) ou (27), alors la matrice $\mathbf{C_{k+1}}$ obtenue par la relation de récurrence (21) est encore bien de la forme (19), (20) ou (21). En outre, étant donné que les éléments de la matrice $\overset{\circ}{\mathbf{C}_{\mathbf{k}}}$ sont supérieurs ou égaux aux éléments de la matrice

$\mathbf{Min}\left(\overset{\circ}{\mathbf{C}_{\mathbf{k}}}\right) \otimes \mathbf{u_1}$, la matrice $\mathbf{C_k}$ donnée par (23) est constituée de 0 et de 1. Autrement dit, le code spatio-temporel différentiel $\mathbf{C_k}$ n'introduit pas d'inversion de polarité des impulsions le signal modulé, ni d'amplification de ces dernières.

Le code spatio-temporel $\mathbf{C_k}$ est à débit unitaire puisque $P$ symboles d'information sont transmis pendant $P$ utilisations du canal. On peut également montrer qu'il est à diversité maximale.

De manière générale, toute permutation sur les lignes (on entend ici par ligne, une ligne de vecteurs 1×2) et/ou les colonnes de $\mathbf{C_k}$ dans les expressions (19), (20), (21) est un code spatio-temporel selon l'invention, une permutation sur les lignes équivalant à une permutation des instants d'utilisation du canal (PCUs) et une permutation sur les colonnes équivalant à une permutation des antennes de transmission.

A titre d'illustration, la matrice $\mathbf{C_k}$ peut être développée, par exemple pour $P = 2$:

$$
\mathbf{C_k} = \begin{pmatrix} \mathbf{c_{k,1}} & \mathbf{c_{k,2}} \\ \mathbf{c_{k,2}}\Omega & \mathbf{c_{k,1}} \end{pmatrix} = \begin{pmatrix} c_{k,1,1} & c_{k,1,2} & c_{k,2,1} & c_{k,2,2} \\ c_{k,2,2} & c_{k,2,1} & c_{k,1,1} & c_{k,1,2} \end{pmatrix}
$$

(28)

$c_{k,1,1}$ et $c_{k,1,2}$ correspondent aux amplitudes respectives des impulsions en première et seconde positions de modulation pour le premier temps symbole (ou premier PCU) du $k^{ième}$ temps bloc et pour la première antenne. $c_{k,2,1}$ et $c_{k,2,2}$

correspondent aux amplitudes respectives des impulsions en première et seconde positions de modulation pour le premier temps symbole du $k^{ième}$ temps bloc et pour la seconde antenne. Lors du deuxième temps symbole (ou second PCU) du $k^{ième}$ temps bloc, la première antenne transmet successivement des impulsions d'amplitudes respectives $c_{k,2,2}$ et $c_{k,2,1}$ pour la première et la seconde positions de modulation alors que la seconde antenne transmet successivement pendant ce même temps des impulsions d'amplitudes respectives $c_{k,1,1}$ et $c_{k,1,2}$ pour ces mêmes positions de modulation.

On supposera ici que le système utilise un signal TH-UWB, tel que défini en (7). Le code spatio-temporel différentiel module ce signal et le signal modulé est transmis pendant deux utilisations consécutives du canal (PCUs). Soit un bloc de symboles 2-PPM $\sigma_k=(s_{k,1},s_{k,2})$. Pendant la première utilisation du canal, la première antenne transmet une première trame, soit en reprenant les notations de (8) :

$$s_k^1(t) == \sum_{n=0}^{N_s-1} c_{k,1,1}w(t-nT_s-c(n)T_c)+c_{k,1,2}w(t-nT_s-c(n)T_c-\varepsilon) \qquad (29)$$

où 0 et $\varepsilon$ correspondent aux deux positions de modulation, et la seconde antenne transmet simultanément une première trame :

$$s_k^2(t) = \sum_{n=0}^{N_s-1} c_{k,2,1}w(t-nT_s-c(n)T_c)+c_{k,2,2}w(t-nT_s-c(n)T_c-\varepsilon) \qquad (30)$$

Pendant la seconde utilisation du canal, la première antenne transmet une seconde trame :

$$s_k^1(t) == \sum_{n=0}^{N_s-1} c_{k,2,2}w(t-nT_s-c(n)T_c)+c_{k,2,1}w(t-nT_s-c(n)T_c-\varepsilon)$$

$$(31)$$

et la seconde transmet simultanément une seconde trame :

$$s_k^2(t) = \sum_{n=0}^{N_s-1} c_{k,1,1}w(t-nT_s-c(n)T_c)+c_{k,1,2}w(t-nT_s-c(n)T_c-\varepsilon)$$

$$(32)$$

Comme on l'a vu plus haut $c_{k,1,1}$, $c_{k,1,2}$, $c_{k,2,1}$ et $c_{k,2,2}$ sont des valeurs égales à 0 ou 1 et n'introduisent par conséquent pas d'inversion de polarité ni d'amplification des impulsions. Ce code spatio-temporel se prête bien à la modulation d'un signal ultra-large bande.

Il est clair pour l'homme du métier que l'on obtiendrait des expressions similaires en utilisant un signal DS-UWB selon l'expression (9) voire un signal DS-TH-UWB selon l'expression (10) au lieu d'un signal TH-UWB.

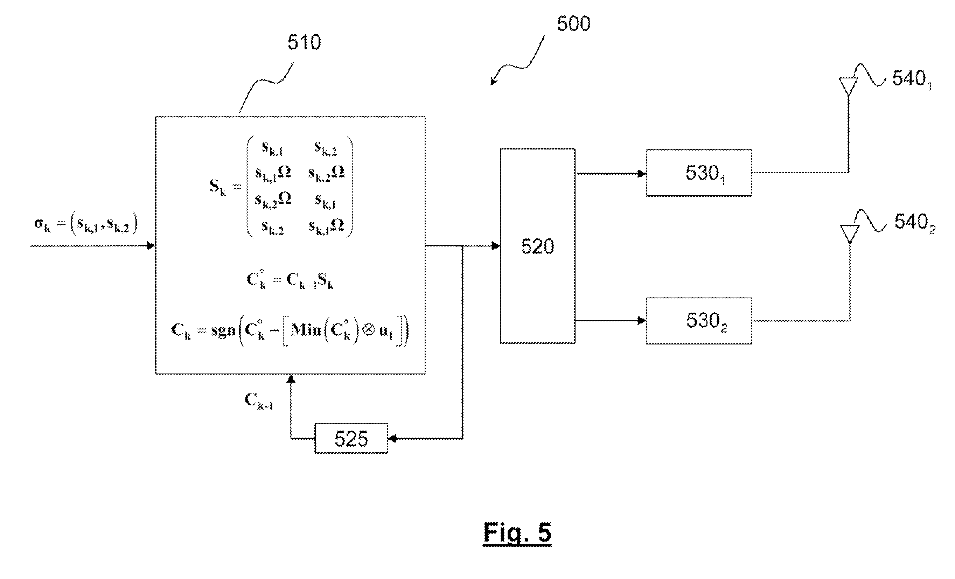

La Fig. 5 représente un système de transmission multi-antenne utilisant un code spatio-temporel différentiel selon un mode de réalisation de l'invention. Dans ce mode de réalisation, $P$=2 et le code spatio-temporel est donné par (19).

Le système 500 reçoit des blocs de 2 symboles d'information $\sigma_k=(s_{k,1},s_{k,2})$ où $s_{k,1},s_{k,2}$ sont des symboles 2-PPM. Le système 500 peut de manière générale recevoir des mots de 2 bits, la valeur d'un bit donnant une position PPM, par exemple 0 correspond à la première position PPM et 1 correspond à la seconde.

Le bloc de symboles d'information $\sigma_k=(s_{k,1},s_{k,2})$ subit une opération de codage dans le codeur spatio-temporel différentiel 510. Plus précisément, le codeur 510 détermine tout d'abord les éléments de la matrice $\mathbf{S_k}$ au moyen de

(25), puis calcule la matrice $\mathbf{C_k}$ à partir de $\mathbf{S_k}$ et $\mathbf{C_{k-1}}$ au moyen de la relation de récurrence (23). Les coefficients de la matrice $\mathbf{C_{k-1}}$ sont mémorisés dans l'élément de retard 525 pour être disponible lors du codage du bloc $\sigma_k$.

Les 2 vecteurs ligne $1 \times 2$ de la première ligne de $\mathbf{C_k}$, soit $(c_{k,1,1}\ c_{k,1,2})$, $(c_{k,2,1}\ c_{k,2,2})$ sont transmis respectivement aux modulateurs UWB $530_1$ et $530_2$ via le multiplexeur 520 pour générer les premières trame selon (29) et (30), puis les 2 vecteurs ligne $1 \times 2$ de la première ligne de $\mathbf{C_k}$, de la seconde ligne de $\mathbf{C_k}$, soit $(c_{k,2,2}\ c_{k,2,1})$, $(c_{k,1,1}\ c_{k,1,2})$ pour générer les secondes trames selon (31) et (32). Les signaux UWB impulsionnels ainsi modulés sont transmis ensuite aux éléments radiatifs $540_1$ et $540_2$. Ces éléments radiatifs peuvent être des antennes UWB ou bien des diodes laser ou encore des diodes électroluminescentes, fonctionnant par exemple dans le domaine infrarouge, associées à des modulateurs électro-optiques.

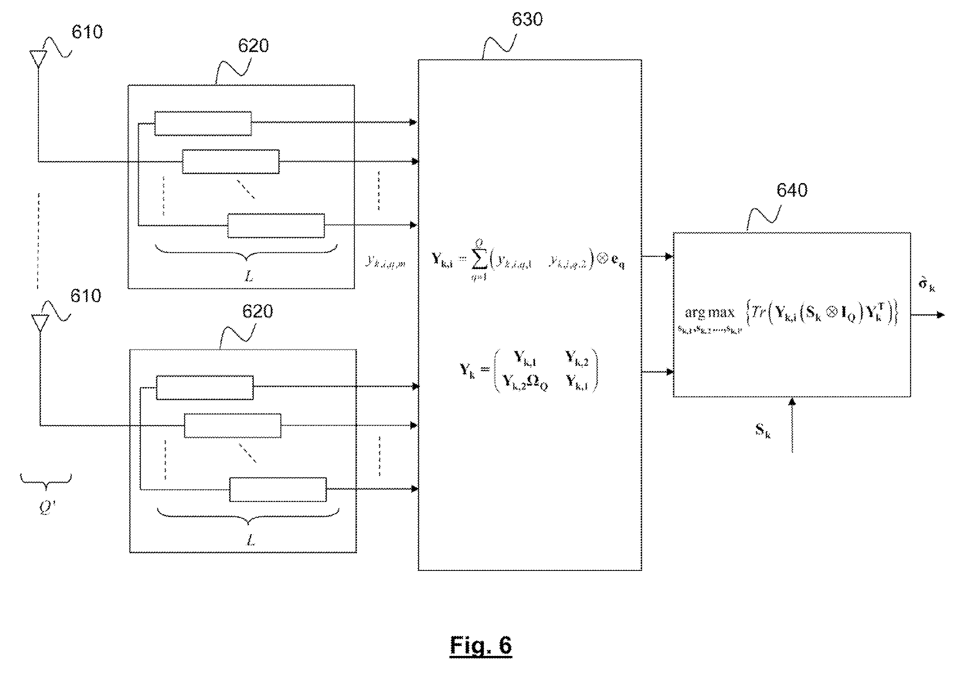

Les signaux UWB transmis par le système illustré en Fig. 5 peuvent être traités par un récepteur mono-antenne ou multi-antenne selon l'invention qui sera maintenant décrit en relation avec la Figure 6.

Le récepteur 600 comprend $Q'$ capteurs 610, par exemple $Q'$ photorécepteurs, ou comme représenté ici $Q'$ antennes de réception UWB. Chaque antenne (ou capteur) est reliée à un filtre Rake 620 à $L$ doigts pour suivre les $L$ multi-trajets du canal de propagation relatif à cette antenne. Les $Q=Q'L$ variables de décision en sortie des doigts des filtres Rake sont fournies à un module de calcul 630. Pour une antenne $q' = 1,..,Q'$ donnée et un trajet $\ell = 1,..,L$, on note $y_{k,i,q,m}$ la variable de décision fournie pour la $m$-ième position de modulation pendant le $i$-ième temps symbole du $k$-ième temps bloc, avec $q=(q'-1)L+\ell$.

Le module de calcul 630 calcule tout d'abord, pour chaque temps bloc $k$ et chaque temps symbole $i = 1,..,P$, les composantes des vecteur-lignes $\mathbf{Y_{k,i}}$, de taille $1 \times 2Q$ définis par :

$$\mathbf{Y_{k,i}} = \sum_{q=1}^{Q} \begin{pmatrix} y_{k,i,q,1} & y_{k,i,q,2} \end{pmatrix} \otimes \mathbf{e_q} \qquad (33)$$

où $\mathbf{e_q}$ est un vecteur-ligne de taille $Q$, défini comme le $q$-ième vecteur ligne de la matrice identité $\mathbf{I_Q}$, de taille $Q \times Q$, c'est-à-dire $\mathbf{e_q} = (\delta_{jq})_{j=1,...,Q}$ avec $\delta_{jq} = 1$ si $j = q$ et $\delta_{jq} = 0$ sinon.

Le module de calcul 630 construit ensuite la matrice $\mathbf{Y_k}$ de taille $P \times 2QP$ définie par :

Si $P = 2$ :

$$\mathbf{Y_k} = \begin{pmatrix} \mathbf{Y_{k,1}} & \mathbf{Y_{k,2}} \\ \mathbf{Y_{k,2}\Omega_Q} & \mathbf{Y_{k,1}} \end{pmatrix} \qquad (34)$$

Si $P = 4$ :

$$\mathbf{Y_k} = \begin{pmatrix} \mathbf{Y_{k,1}} & \mathbf{Y_{k,2}} & \mathbf{Y_{k,3}} & \mathbf{Y_{k,4}} \\ \mathbf{Y_{k,2}\Omega_Q} & \mathbf{Y_{k,1}} & \mathbf{Y_{k,4}\Omega_Q} & \mathbf{Y_{k,2}} \\ \mathbf{Y_{k,3}\Omega_Q} & \mathbf{Y_{k,4}} & \mathbf{Y_{k,1}} & \mathbf{Y_{k,2}\Omega_Q} \\ \mathbf{Y_{k,4}\Omega_Q} & \mathbf{Y_{k,3}\Omega_Q} & \mathbf{Y_{k,2}} & \mathbf{Y_{k,1}} \end{pmatrix} \qquad (35)$$

Si $P = 8$ :

$$\mathbf{Y_k} = \begin{pmatrix} \mathbf{Y_{k,1}} & \mathbf{Y_{k,2}} & \mathbf{Y_{k,3}} & \mathbf{Y_{k,4}} & \mathbf{Y_{k,5}} & \mathbf{Y_{k,6}} & \mathbf{Y_{k,7}} & \mathbf{Y_{k,8}} \\ \mathbf{Y_{k,2}\Omega_Q} & \mathbf{Y_{k,1}} & \mathbf{Y_{k,4}} & \mathbf{Y_{k,3}\Omega_Q} & \mathbf{Y_{k,6}} & \mathbf{Y_{k,5}\Omega_Q} & \mathbf{Y_{k,8}\Omega_Q} & \mathbf{Y_{k,7}} \\ \mathbf{Y_{k,3}\Omega_Q} & \mathbf{Y_{k,4}\Omega_Q} & \mathbf{Y_{k,1}} & \mathbf{Y_{k,2}} & \mathbf{Y_{k,7}} & \mathbf{Y_{k,8}} & \mathbf{Y_{k,5}\Omega_Q} & \mathbf{Y_{k,6}\Omega_Q} \\ \mathbf{Y_{k,4}\Omega_Q} & \mathbf{Y_{k,3}} & \mathbf{Y_{k,2}\Omega_Q} & \mathbf{Y_{k,1}} & \mathbf{Y_{k,8}} & \mathbf{Y_{k,7}\Omega_Q} & \mathbf{Y_{k,6}} & \mathbf{Y_{k,5}\Omega_Q} \\ \mathbf{Y_{k,5}\Omega_Q} & \mathbf{Y_{k,6}\Omega_Q} & \mathbf{Y_{k,7}\Omega_Q} & \mathbf{Y_{k,8}\Omega_Q} & \mathbf{Y_{k,1}} & \mathbf{Y_{k,2}} & \mathbf{Y_{k,3}} & \mathbf{Y_{k,4}} \\ \mathbf{Y_{k,6}\Omega_Q} & \mathbf{Y_{k,5}} & \mathbf{Y_{k,8}\Omega_Q} & \mathbf{Y_{k,7}} & \mathbf{Y_{k,2}\Omega_Q} & \mathbf{Y_{k,1}} & \mathbf{Y_{k,4}\Omega_Q} & \mathbf{Y_{k,3}} \\ \mathbf{Y_{k,7}\Omega_Q} & \mathbf{Y_{k,8}} & \mathbf{Y_{k,5}} & \mathbf{Y_{k,6}} & \mathbf{Y_{k,3}\Omega_Q} & \mathbf{Y_{k,4}} & \mathbf{Y_{k,1}} & \mathbf{Y_{k,2}\Omega_Q} \\ \mathbf{Y_{k,8}\Omega_Q} & \mathbf{Y_{k,7}\Omega_Q} & \mathbf{Y_{k,6}\Omega_Q} & \mathbf{Y_{k,5}} & \mathbf{Y_{k,4}\Omega_Q} & \mathbf{Y_{k,3}\Omega_Q} & \mathbf{Y_{k,2}} & \mathbf{Y_{k,1}} \end{pmatrix} \tag{36}$$

où $\Omega_\mathbf{Q}$ est une matrice donnée par $\Omega_\mathbf{Q}=\Omega\otimes\mathbf{I_Q}$ où $\mathbf{I_Q}$ est la matrice identité de taille $Q\times Q$ et $\Omega$ est la matrice de permutation définie par (20).

A chaque temps bloc $k$, le module de calcul 630 transmet les éléments des matrices $\mathbf{Y_{k,i}}$, $i = 1,..,P$ et $\mathbf{Y_k}$ au module de détection 640. Le module de détection estime les symboles $\mathbf{s_{k,1},s_{k,2},...,,s_{k,P}}$ du bloc $\sigma_\mathbf{k}$ au moyen de la décision suivante :

$$\hat{\sigma}_k = (\hat{s}_{k,1},\hat{s}_{k,2},...,\hat{s}_{k,P}) = \underset{s_{k,1},s_{k,2},...,s_{k,P}}{\arg\max} \left\{ trace\left( \mathbf{Y_{k,i}} \left( \mathbf{S_k} \otimes \mathbf{I_Q} \right) \mathbf{Y_k^T} \right) \right\} \tag{37}$$

où $\mathbf{Y_k^T}$ est la transposée de $\mathbf{Y_k}$ et $\mathbf{S_k}$ est définie par (25), (26) ou (27) selon la valeur de $P$.

On remarquera qu'aucune des expressions (33) à (37) ne fait intervenir une estimation de canal de propagation, le décodage du code spatio-temporel se faisant uniquement à partir des valeurs des variables de décision $y_{k,i,q,m}$.

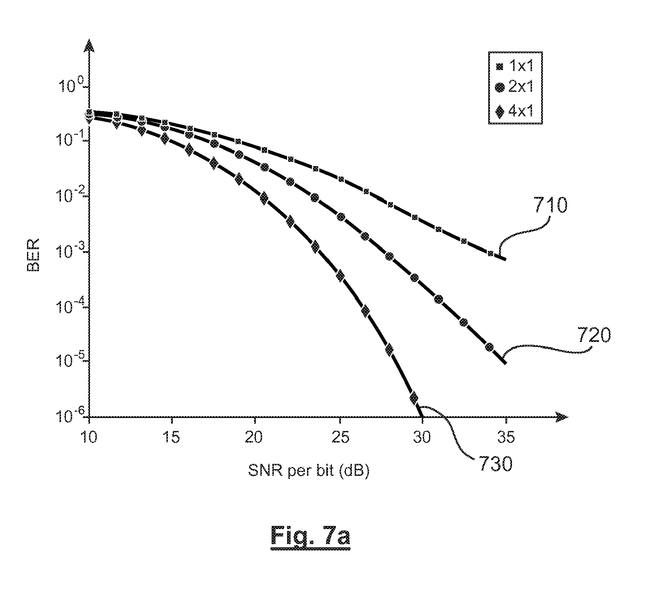

La Fig. 7A donne les courbes de taux d'erreur binaire (BER) en fonction du rapport signal sur bruit (SNR) pour un système MIMO UWB utilisant le codage spatio-temporel selon l'invention avec un canal de propagation n'introduisant pas d'interférence entre impulsions. La séparation entre les deux positions PMM est de 100 ns, choisie plus grande que l'étalement temporel du canal UWB (inférieur à 100ns). Les filtres de Rake sont d'ordre $L$=5.

On a représenté les courbes de taux d'erreur pour un système MISO à deux antennes d'émission (2×1), 720, et pour un système MISO à quatre antennes d'émission (4×1), 730. A titre de comparaison on a également représenté en 710 la courbe de taux d'erreur pour un système classique mono-antenne (1×1). On remarquera dans les deux cas le gain en BER par rapport au système mono-antenne classique.

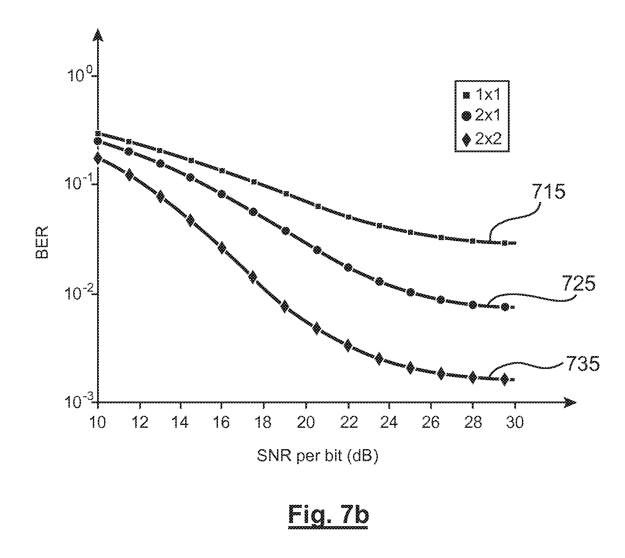

La Fig. 7B donne les courbes de taux d'erreur binaire (BER) en fonction du rapport signal sur bruit (SNR) pour un système MIMO UWB utilisant le codage spatio-temporel selon l'invention avec un canal de propagation introduisant une interférence entre impulsions. La séparation entre les deux positions PMM est de 5 ns, inférieure à l'étalement temporel du canal UWB (inférieur à 100ns). Les filtres de Rake sont également d'ordre $L$=5.

On a représenté les courbes de taux d'erreur pour un système MISO à deux antennes d'émission (2×1), 725, et pour un système MIMO à deux antennes d'émission et deux antennes de réception (2×2), 735. A titre de comparaison on a également fait figurer en 715 la courbe de taux d'erreur pour un système classique mono-antenne (1×1). On remarquera que dans ce cas aussi on obtient un gain en BER par rapport au système mono-antenne classique.

## Revendications

**1.** Procédé de codage spatio-temporel différentiel pour système de transmission UWB à deux éléments radiatifs, ledit procédé codant un bloc $\sigma_k = (s_{k,1}, s_{k,2})$ de symboles d'information appartenant à un alphabet de modulation 2-PPM, en une séquence de deux vecteurs à deux composantes, les composantes d'un vecteur étant destinées à moduler en position un signal UWB impulsionnel pour un élément radiatif dudit système et une utilisation de canal de transmission donnés, chaque composante correspondant à une position de modulation PPM, **caractérisé en ce que** lesdits vecteurs sont obtenus à partir des éléments de la matrice de code :

$$C_k = \begin{pmatrix} c_{k,1} & c_{k,2} \\ c_{k,2}\Omega & c_{k,1} \end{pmatrix}$$

avec $C_k = \mathbf{sgn}\left( C_k^{\circ} - \left[ \mathbf{Min}\left( C_k^{\circ} \right) \otimes u_1 \right] \right)$ , $C_k^{\circ} = C_{k-1} S_k$ , $u_1 = \begin{pmatrix} 1 & 1 \end{pmatrix}$ , $\otimes$ est le produit de Kronecker, **sgn(X)** est la matrice donnant les valeurs de signe des éléments de **X**, la valeur de signe étant respectivement égal à -1,0,1 si l'élément est négatif, nul ou positif, **Min(X)** est une matrice dont les éléments donnent les valeurs inférieures de deux éléments consécutifs d'une ligne de la matrice **X**, $C_{k-1}$ est la matrice de code pour le bloc de symboles d'information précédent et

$$S_k = \begin{pmatrix} s_{k,1} & s_{k,2} \\ s_{k,1}\Omega & s_{k,2}\Omega \\ s_{k,2}\Omega & s_{k,1} \\ s_{k,2} & s_{k,1}\Omega \end{pmatrix}$$

une ligne de la matrice $C_k$ correspondant à une utilisation du canal de transmission et une colonne de la matrice correspondant à un élément radiatif, la matrice $C_k$ étant définie à une permutation près de ses lignes et/ou ses colonnes et $\Omega$ étant une permutation des deux positions de modulation PPM.

2. Procédé de codage spatio-temporel différentiel pour système de transmission UWB à quatre éléments radiatifs, ledit procédé codant un bloc $\sigma_k = (s_{k,1}, s_{k,2}, s_{k,3}, s_{k,4})$ de quatre symboles d'information appartenant à un alphabet de modulation 2-PPM, en une séquence de quatre vecteurs à deux composantes, les composantes d'un vecteur étant destinées à moduler en position un signal UWB impulsionnel pour un élément radiatif dudit système et une utilisation de canal de transmission donnés, chaque composante correspondant à une position de modulation PPM, **caractérisé en ce que** lesdits vecteurs sont obtenus à partir des éléments de la matrice de code :

$$C_k = \begin{pmatrix} c_{k,1} & c_{k,2} & c_{k,3} & c_{k,4} \\ c_{k,2}\Omega & c_{k,1} & c_{k,4}\Omega & c_{k,3} \\ c_{k,3}\Omega & c_{k,4} & c_{k,1} & c_{k,2}\Omega \\ c_{k,4}\Omega & c_{k,3}\Omega & c_{k,2} & c_{k,1} \end{pmatrix}$$

avec $C_k = \mathbf{sgn}\left( C_k^{\circ} - \left[ \mathbf{Min}\left( C_k^{\circ} \right) \otimes u_1 \right] \right)$ , $C_k^{\circ} = C_{k-1} S_k$ , $u_1 = \begin{pmatrix} 1 & 1 \end{pmatrix}$ , $\otimes$ est le produit de Kronecker, **sgn(X)** est la matrice donnant les valeurs de signe des éléments de **X**, la valeur de signe étant respectivement égale à -1,0,1 si l'élément est négatif, nul ou positif, **Min(X)** est une matrice dont les éléments donnent les valeurs inférieures de deux éléments consécutifs d'une ligne de la matrice **X**, $C_{k-1}$ est la matrice de code pour le bloc de symboles d'information précédent et

$$S_k = \begin{pmatrix} s_{k,1} & s_{k,2} & s_{k,3} & s_{k,4} \\ s_{k,1}\Omega & s_{k,2}\Omega & s_{k,3}\Omega & s_{k,4}\Omega \\ s_{k,2}\Omega & s_{k,1} & s_{k,4}\Omega & s_{k,3} \\ s_{k,2} & s_{k,1}\Omega & s_{k,4} & s_{k,3}\Omega \\ s_{k,3}\Omega & s_{k,4} & s_{k,1} & s_{k,2}\Omega \\ s_{k,3} & s_{k,4}\Omega & s_{k,1}\Omega & s_{k,2} \\ s_{k,4}\Omega & s_{k,3}\Omega & s_{k,2} & s_{k,1} \\ s_{k,4} & s_{k,3} & s_{k,2}\Omega & s_{k,1}\Omega \end{pmatrix}$$

une ligne de la matrice $C_k$ correspondant à une utilisation du canal de transmission et une colonne de la matrice correspondant à un élément radiatif, la matrice $C_k$ étant définie à une permutation près de ses lignes et/ou ses colonnes et $\Omega$ étant une permutation des deux positions de modulation PPM.

3. Procédé de codage spatio-temporel différentiel pour système de transmission UWB à huit éléments radiatifs, ledit procédé codant un bloc $\sigma_k=(s_{k,1},s_{k,2},s_{k,3},s_{k,4},s_{k,5},s_{k,6},s_{k,7},s_{k,8})$ de huit symboles d'information appartenant à un alphabet de modulation 2-PPM, en une séquence de huit vecteurs à deux composantes, les composantes d'un vecteur étant destinées à moduler en position un signal UWB impulsionnel pour un élément radiatif dudit système et une utilisation de canal de transmission donnés, chaque composante correspondant à une position de modulation PPM, **caractérisé en ce que** lesdits vecteurs sont obtenus à partir des éléments de la matrice de code :

$$C_k = \begin{pmatrix} c_{k,1} & c_{k,2} & c_{k,3} & c_{k,4} & c_{k,5} & c_{k,6} & c_{k,7} & c_{k,8} \\ c_{k,2}\Omega & c_{k,1} & c_{k,4} & c_{k,3}\Omega & c_{k,6} & c_{k,5}\Omega & c_{k,8}\Omega & c_{k,7} \\ c_{k,3}\Omega & c_{k,4}\Omega & c_{k,1} & c_{k,2} & c_{k,7} & c_{k,8} & c_{k,5}\Omega & c_{k,6}\Omega \\ c_{k,4}\Omega & c_{k,3} & c_{k,2}\Omega & c_{k,1} & c_{k,8} & c_{k,7}\Omega & c_{k,6} & c_{k,5}\Omega \\ c_{k,5}\Omega & c_{k,6}\Omega & c_{k,7}\Omega & c_{k,8}\Omega & c_{k,1} & c_{k,2} & c_{k,3} & c_{k,4} \\ c_{k,6}\Omega & c_{k,5}\Omega & c_{k,8}\Omega & c_{k,7} & c_{k,2}\Omega & c_{k,1} & c_{k,4}\Omega & c_{k,3} \\ c_{k,7}\Omega & c_{k,8} & c_{k,5} & c_{k,6}\Omega & c_{k,3}\Omega & c_{k,4} & c_{k,1} & c_{k,2}\Omega \\ c_{k,8}\Omega & c_{k,7}\Omega & c_{k,6} & c_{k,5} & c_{k,4}\Omega & c_{k,3}\Omega & c_{k,2} & c_{k,1} \end{pmatrix}$$

avec $C_k = \mathbf{sgn}\left(C_k^{\circ} - \left[\mathbf{Min}\left(C_k^{\circ}\right) \otimes u_1\right]\right)$, $C_k^{\circ} = C_{k-1}S_k$, $u_1 = \begin{pmatrix} 1 & 1 \end{pmatrix}$, $\otimes$ est le produit de Kronecker, **sgn(X)** est la matrice donnant les valeurs de signe des éléments de **X**, la valeur de signe étant respectivement égale à -1,0,1 si l'élément est négatif, nul ou positif, **Min(X)** est une matrice dont les éléments donnent les valeurs inférieures de deux éléments consécutifs d'une ligne de la matrice **X**, $C_{k-1}$ est la matrice de code pour le bloc de symboles d'information précédent et

$$
\mathbf{S_k} = \begin{pmatrix}
s_{k,1} & s_{k,2} & s_{k,3} & s_{k,4} & s_{k,5} & s_{k,6} & s_{k,7} & s_{k,8} \\
s_{k,1}\Omega & s_{k,2}\Omega & s_{k,3}\Omega & s_{k,4}\Omega & s_{k,5}\Omega & s_{k,6}\Omega & s_{k,7}\Omega & s_{k,8}\Omega \\
s_{k,2}\Omega & s_{k,1} & s_{k,4} & s_{k,3}\Omega & s_{k,6} & s_{k,5}\Omega & s_{k,8}\Omega & s_{k,7} \\
s_{k,2} & s_{k,1}\Omega & s_{k,4}\Omega & s_{k,3} & s_{k,6}\Omega & s_{k,5} & s_{k,8} & s_{k,7}\Omega \\
s_{k,3}\Omega & s_{k,4}\Omega & s_{k,1} & s_{k,2} & s_{k,7} & s_{k,8} & s_{k,5}\Omega & s_{k,6}\Omega \\
s_{k,3} & s_{k,4} & s_{k,1}\Omega & s_{k,2}\Omega & s_{k,7}\Omega & s_{k,8}\Omega & s_{k,5} & s_{k,6} \\
s_{k,4}\Omega & s_{k,3} & s_{k,2}\Omega & s_{k,1} & s_{k,8} & s_{k,7}\Omega & s_{k,6} & s_{k,5}\Omega \\
s_{k,4} & s_{k,3}\Omega & s_{k,2} & s_{k,1}\Omega & s_{k,8}\Omega & s_{k,7} & s_{k,6}\Omega & s_{k,5} \\
s_{k,5}\Omega & s_{k,6}\Omega & s_{k,7}\Omega & s_{k,8}\Omega & s_{k,1} & s_{k,2} & s_{k,3} & s_{k,4} \\
s_{k,5} & s_{k,6} & s_{k,7} & s_{k,8} & s_{k,1}\Omega & s_{k,2}\Omega & s_{k,3}\Omega & s_{k,4}\Omega \\
s_{k,6}\Omega & s_{k,5} & s_{k,8}\Omega & s_{k,7} & s_{k,2}\Omega & s_{k,1} & s_{k,4}\Omega & s_{k,3} \\
s_{k,6} & s_{k,5}\Omega & s_{k,8} & s_{k,7}\Omega & s_{k,2} & s_{k,1}\Omega & s_{k,4} & s_{k,3}\Omega \\
s_{k,7}\Omega & s_{k,8} & s_{k,5} & s_{k,6}\Omega & s_{k,3}\Omega & s_{k,4} & s_{k,1} & s_{k,2}\Omega \\
s_{k,7} & s_{k,8}\Omega & s_{k,5}\Omega & s_{k,6} & s_{k,3} & s_{k,4}\Omega & s_{k,1}\Omega & s_{k,2} \\
s_{k,8}\Omega & s_{k,7}\Omega & s_{k,6} & s_{k,5} & s_{k,4}\Omega & s_{k,3}\Omega & s_{k,2} & s_{k,1} \\
s_{k,8} & s_{k,7} & s_{k,6}\Omega & s_{k,5}\Omega & s_{k,4} & s_{k,3} & s_{k,2}\Omega & s_{k,1}\Omega
\end{pmatrix}
$$

une ligne de la matrice $\mathbf{C_k}$ correspondant à une utilisation du canal de transmission et une colonne de la matrice correspondant à un élément radiatif, la matrice $\mathbf{C_k}$ étant définie à une permutation près de ses lignes et/ou ses colonnes et $\Omega$ étant une permutation des deux positions de modulation PPM.

**4.** Système de transmission UWB à deux éléments radiatifs ($540_1,540_2$), **caractérisé en ce qu'**il comprend :

- des moyens de codage (510) pour coder un bloc $\sigma_k = (s_{k,1},s_{k,2})$ de deux symboles d'information appartenant à un alphabet de modulation 2-PPM, en une séquence de deux vecteurs à deux composantes, les composantes d'un vecteur étant destinées à moduler en position un signal UWB impulsionnel pour un élément radiatif dudit système et une utilisation de canal de transmission données, chaque composante correspondant à une position de modulation PPM, les moyens de codage obtenant lesdits vecteurs à partir des éléments de la matrice de code :

$$
\mathbf{C_k} = \begin{pmatrix}
c_{k,1} & c_{k,2} \\
c_{k,2}\Omega & c_{k,1}
\end{pmatrix}
$$

avec $\mathbf{C_k} = \mathbf{sgn}\left( \mathbf{C_k^\circ} - \left[ \mathbf{Min}\left( \mathbf{C_k^\circ} \right) \otimes \mathbf{u_1} \right] \right)$, $\mathbf{C_k^\circ} = \mathbf{C_{k-1}}\mathbf{S_k}$, $\mathbf{u_1} = \begin{pmatrix} 1 & 1 \end{pmatrix}$, $\otimes$ est le produit de Kronecker, **sgn(X)** est la matrice donnant les valeurs de signe des éléments de **X**, la valeur de signe étant respectivement égale à -1,0,1 si l'élément est négatif, nul ou positif, **Min(X)** est une matrice dont les éléments donnent les valeurs inférieures de deux éléments consécutifs d'une ligne de la matrice **X**, $\mathbf{C_{k-1}}$ est la matrice de code pour le bloc de symboles d'information précédent et

$$S_k = \begin{pmatrix} s_{k,1} & s_{k,2} \\ s_{k,1}\Omega & s_{k,2}\Omega \\ s_{k,2}\Omega & s_{k,1} \\ s_{k,2} & s_{k,1}\Omega \end{pmatrix}$$

une ligne de la matrice $C_k$ correspondant à une utilisation du canal de transmission et une colonne de la matrice correspondant à un élément radiatif, la matrice $C_k$ étant définie à une permutation près de ses lignes et/ou ses colonnes et $\Omega$ étant une permutation des deux positions de modulation PPM ;
- deux modulateurs ($530_1$, $530_2$) pour moduler en position un signal UWB impulsionnel, chaque modulateur étant associé à un élément radiatif et modulant en position ledit signal, pendant une utilisation du canal de transmission, à l'aide des composantes du vecteur associé au dit élément radiatif et à ladite utilisation du canal ;
- chaque élément radiatif ($540_1$, $540_2$) étant adapté à émettre le signal ainsi modulé par ledit modulateur associé.

**5.** Système de transmission UWB à quatre éléments radiatifs, **caractérisé en ce qu'**il comprend :

- des moyens de codage (510) pour coder un bloc $\sigma_k=(s_{k,1},s_{k,2},s_{k,3},s_{k,4})$ de quatre symboles d'information appartenant à un alphabet de modulation 2-PPM, en une séquence de quatre vecteurs à deux composantes, les composantes d'un vecteur étant destinées à moduler en position un signal UWB impulsionnel pour un élément radiatif dudit système et une utilisation de canal de transmission donnés, chaque composante correspondant à une position de modulation PPM, les moyens de codage obtenant lesdits vecteurs à partir des éléments de la matrice de code :

$$C_k = \begin{pmatrix} c_{k,1} & c_{k,2} & c_{k,3} & c_{k,4} \\ c_{k,2}\Omega & c_{k,1} & c_{k,4}\Omega & c_{k,3} \\ c_{k,3}\Omega & c_{k,4} & c_{k,1} & c_{k,2}\Omega \\ c_{k,4}\Omega & c_{k,3}\Omega & c_{k,2} & c_{k,1} \end{pmatrix}$$

avec $C_k = \mathbf{sgn}\left(C_k^\circ - \left[\mathbf{Min}\left(C_k^\circ\right) \otimes u_1\right]\right)$, $C_k^\circ = C_{k-1}S_k$, $u_1 = \begin{pmatrix} 1 & 1 \end{pmatrix}$, $\otimes$ est le produit de Kronecker, **sgn(X)** est la matrice donnant les valeurs de signe des éléments de **X**, la valeur de signe étant respectivement égale à -1,0,1 si l'élément est négatif, nul ou positif, **Min(X)** est une matrice dont les éléments donnent les valeurs inférieures de deux éléments consécutifs d'une ligne de la matrice **X**, $C_{k-1}$ est la matrice de code pour le bloc de symboles d'information précédent et

$$S_k = \begin{pmatrix} s_{k,1} & s_{k,2} & s_{k,3} & s_{k,4} \\ s_{k,1}\Omega & s_{k,2}\Omega & s_{k,3}\Omega & s_{k,4}\Omega \\ s_{k,2}\Omega & s_{k,1} & s_{k,4}\Omega & s_{k,3} \\ s_{k,2} & s_{k,1}\Omega & s_{k,4} & s_{k,3}\Omega \\ s_{k,3}\Omega & s_{k,4} & s_{k,1} & s_{k,2}\Omega \\ s_{k,3} & s_{k,4}\Omega & s_{k,1}\Omega & s_{k,2} \\ s_{k,4}\Omega & s_{k,3}\Omega & s_{k,2} & s_{k,1} \\ s_{k,4} & s_{k,3} & s_{k,2}\Omega & s_{k,1}\Omega \end{pmatrix}$$

une ligne de la matrice $C_k$ correspondant à une utilisation du canal de transmission et une colonne de la matrice correspondant à un élément radiatif, la matrice $C_k$ étant définie à une permutation près de ses lignes et/ou ses colonnes et $\Omega$ étant une permutation des deux positions de modulation PPM ;
- quatre modulateurs pour moduler en position un signal UWB impulsionnel, chaque modulateur étant associé à un élément radiatif et modulant en position ledit signal, pendant une utilisation du canal de transmission, à l'aide des composantes du vecteur associé au dit élément radiatif et à ladite utilisation du canal ;
- chaque élément radiatif étant adapté à émettre le signal ainsi modulé par ledit modulateur associé.

6. Système de transmission UWB à huit éléments radiatifs, **caractérisé en ce qu'**il comprend :

- des moyens de codage pour coder un bloc $\sigma_k = (s_{k,1}, s_{k,2}, s_{k,3}, s_{k,4}, s_{k,5}, s_{k,6}, s_{k,7}, s_{k,8})$ de huit symboles d'information appartenant à un alphabet de modulation 2-PPM, en une séquence de huit vecteurs à deux composantes, les composantes d'un vecteur étant destinées à moduler en position un signal UWB impulsionnel pour un élément radiatif dudit système et une utilisation de canal de transmission donnés, chaque composante correspondant à une position de modulation PPM, les moyens de codage obtenant lesdits vecteurs à partir des éléments de la matrice de code :

$$C_k = \begin{pmatrix} c_{k,1} & c_{k,2} & c_{k,3} & c_{k,4} & c_{k,5} & c_{k,6} & c_{k,7} & c_{k,8} \\ c_{k,2}\Omega & c_{k,1} & c_{k,4} & c_{k,3}\Omega & c_{k,6} & c_{k,5}\Omega & c_{k,8}\Omega & c_{k,7} \\ c_{k,3}\Omega & c_{k,4}\Omega & c_{k,1} & c_{k,2} & c_{k,7} & c_{k,8} & c_{k,5}\Omega & c_{k,6}\Omega \\ c_{k,4}\Omega & c_{k,3} & c_{k,2}\Omega & c_{k,1} & c_{k,8} & c_{k,7}\Omega & c_{k,6} & c_{k,5}\Omega \\ c_{k,5}\Omega & c_{k,6}\Omega & c_{k,7}\Omega & c_{k,8}\Omega & c_{k,1} & c_{k,2} & c_{k,3} & c_{k,4} \\ c_{k,6}\Omega & c_{k,5}\Omega & c_{k,8}\Omega & c_{k,7} & c_{k,2}\Omega & c_{k,1} & c_{k,4}\Omega & c_{k,3} \\ c_{k,7}\Omega & c_{k,8} & c_{k,5} & c_{k,6}\Omega & c_{k,3}\Omega & c_{k,4} & c_{k,1} & c_{k,2}\Omega \\ c_{k,8}\Omega & c_{k,7}\Omega & c_{k,6} & c_{k,5} & c_{k,4}\Omega & c_{k,3}\Omega & c_{k,2} & c_{k,1} \end{pmatrix}$$

avec $C_k = \mathbf{sgn}\left( C_k^{\circ} - \left[ \mathbf{Min}\left( C_k^{\circ} \right) \otimes u_1 \right] \right)$, $C_k^{\circ} = C_{k-1}S_k$, $u_1 = \begin{pmatrix} 1 & 1 \end{pmatrix}$, $\otimes$ est le produit de Kronecker, **sgn(X)** est la matrice donnant les valeurs de signe des éléments de **X**, la valeur de signe étant respectivement égale à -1,0,1 si l'élément est négatif, nul ou positif, **Min(X)** est une matrice dont les éléments donnent les valeurs inférieures de deux éléments consécutifs d'une ligne de la matrice **X**, $C_{k-1}$ est la matrice de code pour le bloc de symboles d'information précédent et

$$S_k = \begin{pmatrix} s_{k,1} & s_{k,2} & s_{k,3} & s_{k,4} & s_{k,5} & s_{k,6} & s_{k,7} & s_{k,8} \\ s_{k,1}\Omega & s_{k,2}\Omega & s_{k,3}\Omega & s_{k,4}\Omega & s_{k,5}\Omega & s_{k,6}\Omega & s_{k,7}\Omega & s_{k,8}\Omega \\ s_{k,2}\Omega & s_{k,1} & s_{k,4} & s_{k,3}\Omega & s_{k,6} & s_{k,5}\Omega & s_{k,8}\Omega & s_{k,7} \\ s_{k,2} & s_{k,1}\Omega & s_{k,4}\Omega & s_{k,3} & s_{k,6}\Omega & s_{k,5} & s_{k,8} & s_{k,7}\Omega \\ s_{k,3}\Omega & s_{k,4}\Omega & s_{k,1} & s_{k,2} & s_{k,7} & s_{k,8} & s_{k,5}\Omega & s_{k,6}\Omega \\ s_{k,3} & s_{k,4} & s_{k,1}\Omega & s_{k,2}\Omega & s_{k,7}\Omega & s_{k,8}\Omega & s_{k,5} & s_{k,6} \\ s_{k,4}\Omega & s_{k,3} & s_{k,2}\Omega & s_{k,1} & s_{k,8} & s_{k,7}\Omega & s_{k,6} & s_{k,5}\Omega \\ s_{k,4} & s_{k,3}\Omega & s_{k,2} & s_{k,1}\Omega & s_{k,8}\Omega & s_{k,7} & s_{k,6}\Omega & s_{k,5} \\ s_{k,5}\Omega & s_{k,6}\Omega & s_{k,7}\Omega & s_{k,8}\Omega & s_{k,1} & s_{k,2} & s_{k,3} & s_{k,4} \\ s_{k,5} & s_{k,6} & s_{k,7} & s_{k,8} & s_{k,1}\Omega & s_{k,2}\Omega & s_{k,3}\Omega & s_{k,4}\Omega \\ s_{k,6}\Omega & s_{k,5} & s_{k,8}\Omega & s_{k,7} & s_{k,2}\Omega & s_{k,1} & s_{k,4}\Omega & s_{k,3} \\ s_{k,6} & s_{k,5}\Omega & s_{k,8} & s_{k,7}\Omega & s_{k,2} & s_{k,1}\Omega & s_{k,4} & s_{k,3}\Omega \\ s_{k,7}\Omega & s_{k,8} & s_{k,5} & s_{k,6}\Omega & s_{k,3}\Omega & s_{k,4} & s_{k,1} & s_{k,2}\Omega \\ s_{k,7} & s_{k,8}\Omega & s_{k,5}\Omega & s_{k,6} & s_{k,3} & s_{k,4}\Omega & s_{k,1}\Omega & s_{k,2} \\ s_{k,8}\Omega & s_{k,7}\Omega & s_{k,6} & s_{k,5} & s_{k,4}\Omega & s_{k,3}\Omega & s_{k,2} & s_{k,1} \\ s_{k,8} & s_{k,7} & s_{k,6}\Omega & s_{k,5}\Omega & s_{k,4} & s_{k,3} & s_{k,2}\Omega & s_{k,1}\Omega \end{pmatrix}$$

une ligne de la matrice $C_k$ correspondant à une utilisation du canal de transmission et une colonne de la matrice correspondant à un élément radiatif, la matrice $C_k$ étant définie à une permutation près de ses lignes et/ou ses colonnes et $\Omega$ étant une permutation des deux positions de modulation PPM ;
- huit modulateurs pour moduler en position un signal UWB impulsionnel, chaque modulateur étant associé à un élément radiatif et modulant en position ledit signal, pendant une utilisation du canal de transmission, à l'aide des composantes du vecteur associé au dit élément radiatif et à ladite utilisation du canal ;
- chaque élément radiatif étant adapté à émettre le signal ainsi modulé par ledit modulateur associé.

7. Système de transmission selon l'une des revendications 4 à 6, **caractérisé en ce que** les éléments radiatifs sont des antennes UWB.

8. Système de transmission selon l'une des revendications 4 à 6, **caractérisé en ce que** les éléments radiatifs sont des diodes laser ou des diodes électroluminescentes.

9. Système de transmission selon l'une des revendications 4 à 6, **caractérisé en ce que** ledit signal impulsionnel est un signal TH-UWB.

10. Système de transmission selon l'une des revendications 4 à 6, **caractérisé en ce que** ledit signal impulsionnel est un signal DS-UWB.

11. Système de transmission selon l'une des revendications 4 à 6, **caractérisé en ce que** ledit signal impulsionnel est un signal TH-DS-UWB.

12. Système de réception UWB comportant une pluralité ($Q'$) de capteurs (610) destinés à recevoir un signal UWB impulsionnel transmis par un système de transmission selon l'une des revendications 4 à 11, **caractérisé en ce que :**

- chaque capteur (610) est relié à un filtre Rake (620) comprenant une pluralité ($L$) de doigts, chaque doigt suivant un multi-trajet du canal de propagation associé à ce capteur, chaque doigt $q = 1,..,Q'L$ fournissant une valeur de variable de décision, $Y_{k,i,q,m}$, pour la $m$-ième position de modulation pendant le $i$-ième temps symbole du $k$-ième temps bloc ;

- un module de calcul (630) recevant lesdites valeurs de variables de décision et calculant :

• pour chaque temps bloc $k$ et chaque temps symbole $i$ = 1,...,$P$, le vecteur ligne $\mathbf{Y_{k,i}}$ défini par

$$\mathbf{Y_{k,i}} = \sum_{q=1}^{Q} \begin{pmatrix} y_{k,i,q,1} & y_{k,i,q,2} \end{pmatrix} \otimes \mathbf{e_q}$$

où $\mathbf{e_q}$ est le $q$-ième vecteur ligne de la matrice identité $\mathbf{I_Q}$, de taille $Q \times Q$ ;

• pour chaque temps bloc $\boldsymbol{k}$, la matrice $\mathbf{Y_k}$ de taille $P \times 2QP$, où $P$ est le nombre d'antennes du système de transmission, définie par :

Si $P$=2 :

$$\mathbf{Y_k} = \begin{pmatrix} \mathbf{Y_{k,1}} & \mathbf{Y_{k,2}} \\ \mathbf{Y_{k,2}\Omega_Q} & \mathbf{Y_{k,1}} \end{pmatrix}$$

Si $P$ = 4 :

$$\mathbf{Y_k} = \begin{pmatrix} \mathbf{Y_{k,1}} & \mathbf{Y_{k,2}} & \mathbf{Y_{k,3}} & \mathbf{Y_{k,4}} \\ \mathbf{Y_{k,2}\Omega_Q} & \mathbf{Y_{k,1}} & \mathbf{Y_{k,4}\Omega_Q} & \mathbf{Y_{k,2}} \\ \mathbf{Y_{k,3}\Omega_Q} & \mathbf{Y_{k,4}} & \mathbf{Y_{k,1}} & \mathbf{Y_{k,2}\Omega_Q} \\ \mathbf{Y_{k,4}\Omega_Q} & \mathbf{Y_{k,3}\Omega_Q} & \mathbf{Y_{k,2}} & \mathbf{Y_{k,1}} \end{pmatrix}$$

Si $P$ = 8 :

$$\mathbf{Y_k} = \begin{pmatrix} \mathbf{Y_{k,1}} & \mathbf{Y_{k,2}} & \mathbf{Y_{k,3}} & \mathbf{Y_{k,4}} & \mathbf{Y_{k,5}} & \mathbf{Y_{k,6}} & \mathbf{Y_{k,7}} & \mathbf{Y_{k,8}} \\ \mathbf{Y_{k,2}\Omega_Q} & \mathbf{Y_{k,1}} & \mathbf{Y_{k,4}} & \mathbf{Y_{k,3}\Omega_Q} & \mathbf{Y_{k,6}} & \mathbf{Y_{k,5}\Omega_Q} & \mathbf{Y_{k,8}\Omega_Q} & \mathbf{Y_{k,7}} \\ \mathbf{Y_{k,3}\Omega_Q} & \mathbf{Y_{k,4}\Omega_Q} & \mathbf{Y_{k,1}} & \mathbf{Y_{k,2}} & \mathbf{Y_{k,7}} & \mathbf{Y_{k,8}} & \mathbf{Y_{k,5}\Omega_Q} & \mathbf{Y_{k,6}\Omega_Q} \\ \mathbf{Y_{k,4}\Omega_Q} & \mathbf{Y_{k,3}} & \mathbf{Y_{k,2}\Omega_Q} & \mathbf{Y_{k,1}} & \mathbf{Y_{k,8}} & \mathbf{Y_{k,7}\Omega_Q} & \mathbf{Y_{k,6}} & \mathbf{Y_{k,5}\Omega_Q} \\ \mathbf{Y_{k,5}\Omega_Q} & \mathbf{Y_{k,6}\Omega_Q} & \mathbf{Y_{k,7}\Omega_Q} & \mathbf{Y_{k,8}\Omega_Q} & \mathbf{Y_{k,1}} & \mathbf{Y_{k,2}} & \mathbf{Y_{k,3}} & \mathbf{Y_{k,4}} \\ \mathbf{Y_{k,6}\Omega_Q} & \mathbf{Y_{k,5}} & \mathbf{Y_{k,8}\Omega_Q} & \mathbf{Y_{k,7}} & \mathbf{Y_{k,2}\Omega_Q} & \mathbf{Y_{k,1}} & \mathbf{Y_{k,4}\Omega_Q} & \mathbf{Y_{k,3}} \\ \mathbf{Y_{k,7}\Omega_Q} & \mathbf{Y_{k,8}} & \mathbf{Y_{k,5}} & \mathbf{Y_{k,6}} & \mathbf{Y_{k,3}\Omega_Q} & \mathbf{Y_{k,4}} & \mathbf{Y_{k,1}} & \mathbf{Y_{k,2}\Omega_Q} \\ \mathbf{Y_{k,8}\Omega_Q} & \mathbf{Y_{k,7}\Omega_Q} & \mathbf{Y_{k,6}\Omega_Q} & \mathbf{Y_{k,5}} & \mathbf{Y_{k,4}\Omega_Q} & \mathbf{Y_{k,3}\Omega_Q} & \mathbf{Y_{k,2}} & \mathbf{Y_{k,1}} \end{pmatrix}$$

où $\Omega_\mathbf{Q}$ est une matrice donnée par $\Omega_\mathbf{Q} = \Omega \otimes \mathbf{I_Q}$ où $\mathbf{I_Q}$ est la matrice identité de taille $Q \times Q$ et $\Omega$ est la matrice de permutation des deux positions de modulation PPM,

- un module de détection (640) estimant les $P$ symboles d'information transmis pendant le temps bloc $k$ par

$$(\hat{\mathbf{s}}_{\mathbf{k,1}}, \hat{\mathbf{s}}_{\mathbf{k,2}}, ..., \hat{\mathbf{s}}_{\mathbf{k,P}}) = \underset{\mathbf{s}_{k,1}, \mathbf{s}_{k,2}, ..., \mathbf{s}_{k,P}}{\arg\max} \left\{ trace\left(\mathbf{Y_{k,i}}\left(\mathbf{S_k} \otimes \mathbf{I_Q}\right)\mathbf{Y_k^T}\right) \right\}$$

où $\otimes$ est le produit de Kronecker et

si $P = 2$, $\mathbf{S_k}$ est donnée par :

$$S_k = \begin{pmatrix} s_{k,1} & s_{k,2} \\ s_{k,1}\Omega & s_{k,2}\Omega \\ s_{k,2}\Omega & s_{k,1} \\ s_{k,2} & s_{k,1}\Omega \end{pmatrix}$$

si $P = 4$, $\mathbf{S_k}$ est une donnée par :

$$S_k = \begin{pmatrix} s_{k,1} & s_{k,2} & s_{k,3} & s_{k,4} \\ s_{k,1}\Omega & s_{k,2}\Omega & s_{k,3}\Omega & s_{k,4}\Omega \\ s_{k,2}\Omega & s_{k,1} & s_{k,4}\Omega & s_{k,3} \\ s_{k,2} & s_{k,1}\Omega & s_{k,4} & s_{k,3}\Omega \\ s_{k,3}\Omega & s_{k,4} & s_{k,1} & s_{k,2}\Omega \\ s_{k,3} & s_{k,4}\Omega & s_{k,1}\Omega & s_{k,2} \\ s_{k,4}\Omega & s_{k,3}\Omega & s_{k,2} & s_{k,1} \\ s_{k,4} & s_{k,3} & s_{k,2}\Omega & s_{k,1}\Omega \end{pmatrix}$$

si $P = 8$, $\mathbf{S_k}$ est donnée par :

$$S_k = \begin{pmatrix} s_{k,1} & s_{k,2} & s_{k,3} & s_{k,4} & s_{k,5} & s_{k,6} & s_{k,7} & s_{k,8} \\ s_{k,1}\Omega & s_{k,2}\Omega & s_{k,3}\Omega & s_{k,4}\Omega & s_{k,5}\Omega & s_{k,6}\Omega & s_{k,7}\Omega & s_{k,8}\Omega \\ s_{k,2}\Omega & s_{k,1} & s_{k,4} & s_{k,3}\Omega & s_{k,6} & s_{k,5}\Omega & s_{k,8}\Omega & s_{k,7} \\ s_{k,2} & s_{k,1}\Omega & s_{k,4}\Omega & s_{k,3} & s_{k,6}\Omega & s_{k,5} & s_{k,8} & s_{k,7}\Omega \\ s_{k,3}\Omega & s_{k,4}\Omega & s_{k,1} & s_{k,2} & s_{k,7} & s_{k,8} & s_{k,5}\Omega & s_{k,6}\Omega \\ s_{k,3} & s_{k,4} & s_{k,1}\Omega & s_{k,2}\Omega & s_{k,7}\Omega & s_{k,8}\Omega & s_{k,5} & s_{k,6} \\ s_{k,4}\Omega & s_{k,3} & s_{k,2}\Omega & s_{k,1} & s_{k,8} & s_{k,7}\Omega & s_{k,6} & s_{k,5}\Omega \\ s_{k,4} & s_{k,3}\Omega & s_{k,2} & s_{k,1}\Omega & s_{k,8}\Omega & s_{k,7} & s_{k,6}\Omega & s_{k,5} \\ s_{k,5}\Omega & s_{k,6}\Omega & s_{k,7}\Omega & s_{k,8}\Omega & s_{k,1} & s_{k,2} & s_{k,3} & s_{k,4} \\ s_{k,5} & s_{k,6} & s_{k,7} & s_{k,8} & s_{k,1}\Omega & s_{k,2}\Omega & s_{k,3}\Omega & s_{k,4}\Omega \\ s_{k,6}\Omega & s_{k,5} & s_{k,8}\Omega & s_{k,7} & s_{k,2}\Omega & s_{k,1} & s_{k,4}\Omega & s_{k,3} \\ s_{k,6} & s_{k,5}\Omega & s_{k,8} & s_{k,7}\Omega & s_{k,2} & s_{k,1}\Omega & s_{k,4} & s_{k,3}\Omega \\ s_{k,7}\Omega & s_{k,8} & s_{k,5} & s_{k,6}\Omega & s_{k,3}\Omega & s_{k,4} & s_{k,1} & s_{k,2}\Omega \\ s_{k,7} & s_{k,8}\Omega & s_{k,5}\Omega & s_{k,6} & s_{k,3} & s_{k,4}\Omega & s_{k,1}\Omega & s_{k,2} \\ s_{k,8}\Omega & s_{k,7}\Omega & s_{k,6} & s_{k,5} & s_{k,4}\Omega & s_{k,3}\Omega & s_{k,2} & s_{k,1} \\ s_{k,8} & s_{k,7} & s_{k,6}\Omega & s_{k,5}\Omega & s_{k,4} & s_{k,3} & s_{k,2}\Omega & s_{k,1}\Omega \end{pmatrix}$$

où $s_{k,1}, s_{k,2}, ..., s_{k,P}$ sont les symboles d'information 2-PPM possibles.

**13.** Système de réception selon la revendication 12, **caractérisé en ce que** les capteurs sont des antennes UWB.

**14.** Système de réception selon la revendication 12, **caractérisé en ce que** les capteurs sont des photodétecteurs.

**Fig. 1**

$$\sigma_k = \left( \sigma_{1,k}, \sigma_{2,k} \right)$$

$$S_k = \begin{pmatrix} \sigma_{1,k} & \sigma_{2,k} \\ -\sigma_{2,k}^* & \sigma_{1,k}^* \end{pmatrix}$$

$$C_k = S_k C_{k-1}$$

$C_{k-1}$

210

225

220

200

$230_1$

$230_2$

$240_1$

$240_2$

**Fig. 2**

$T_c$

$T_s$

$c_k(n) = 7,1,4,7$

TH-UWB

**Fig. 3A**

$b_n^{(k)} = +1,-1,+1,-1$

DS-UWB

**Fig. 3B**

TH-DS-UWB

**Fig. 3C**

EP 2 099 137 A2

**Fig. 4**

EP 2 099 137 A2

$$\sigma_k = \left( s_{k,1}, s_{k,2} \right)$$

$$S_k = \begin{pmatrix} s_{k,1} & s_{k,2} \\ s_{k,1}\Omega & s_{k,2}\Omega \\ s_{k,2}\Omega & s_{k,1} \\ s_{k,2} & s_{k,1}\Omega \end{pmatrix}$$

$$C_k^c = C_{k-1}S_k$$

$$C_k = \text{sgn}\left( C_k^c - \left[ \text{Min}\left( C_k^c \right) \otimes u_1 \right] \right)$$

$C_{k-1}$

510

500

520

$530_1$

$530_2$

$540_1$

$540_2$

525

**Fig. 5**

**Fig. 6**

**Fig. 7a**

Fig. 7b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **V. Tarokh et al.** A differential détection scheme for transmit diversity. *IEEE Journal on Selected Areas in Communications,* Juillet 2000, vol. 18 (7), 1169-1174
- **C. Gao et al.** Bit error probability for space-time block code with coherent and differential détection. *Proc. of Vehicular Technology Conference,* Septembre 2002, vol. 1, 410-414
- **C. Abou-Rjeily et al.** Differential space-time ultra-wideband communications. *Proc. of IEEE Conference on Ultra-Wide Band,* Septembre 2005, 248-253